# EUROPEAN PATENT SPECIFICATION

(11) **EP 2 161 603 B1**
(45) Date of publication and mention of the grant of the patent: **18.01.2012**
(21) Application number: 09252111.1
(22) Date of filing: 02.09.2009
(51) Int. Cl.: G02B 7/10, G02B 7/28, G02B 7/34, G03B 13/36, H04N 5/232

(54) **Imaging apparatus**
Aufnahmevorrichtung
Appareil d'imagerie

(30) Priority: 05.09.2008 JP 2008227699
(43) Date of publication of application: 10.03.2010
(73) Proprietor: Ricoh Company, Ltd., Tokyo 143-8555 (JP)
(72) Inventor: Kitajima, Tatsutoshi, Ohta-ku Tokyo 143-8555 (JP)
(74) Representative: Leeming, John Gerard

(56) References cited:
- US-A- 4 963 913
- US-A1- 2001 055 488
- US-B2- 6 377 305

## Description

The present invention relates to an imaging apparatus (digital camera) that can image an object by using an imaging element such as a CCD (charge-coupled device) and record the object as a static image, and particularly, relates to improvement of an imaging apparatus that has a focus detecting element and an imaging element and that is capable of auto-focusing at a high speed.

Conventionally, in imaging apparatuses (digital cameras) with the AF system, a focus evaluation method of the so-called hill-climbing method has been generally employed. In this method, a contrast value (focus evaluation value) is calculated from pixel data of an imaging element used to image an object while a position of a main lens (focus lens) is changed, and it is estimated that the main lens is most focused at a position with the largest calculated contrast value.

Such an imaging apparatus (digital camera) using the hill-climbing focus evaluation method performs focus evaluation with respect to an object by using the imaging element used to image the object. Thus, the imaging apparatus needs no mechanism dedicated to perform focus evaluation, and has an advantage that an imaging apparatus (digital camera) with a smaller in size can be achieved.

Particularly, take the case of an imaging apparatus that includes a movable lens-barrel having an imaging optical system reciprocatable between a storing position and an extended position with respect to the imaging apparatus, and that is configured so that the movable lens-barrel may be stored within the imaging apparatus when not imaging. Such imaging apparatus is advantageous in that the imaging apparatus (digital camera) may be compact in size when not imaging.

However, in the imaging apparatus using the focus evaluation method of this conventional hill-climbing method, the main lens needs to be actually driven in order to find out a focus target position of the main lens. Accordingly, particularly when the main lens has a long focal point, increase in a driving amount of the main lens cannot be avoided, and the auto-focusing takes a longer time.

On the other hand, in a single lens reflex type imaging apparatus, a phase difference method is employed as the focus evaluation method, in which an image-forming light flux to be guided to an imaging element through a imaging optical system is guided to an auto-focusing (AF) unit separate from the imaging element with a mirror as a light flux separation part.

The imaging apparatus using the focus evaluation method of this phase difference method can detect an amount and a direction of deviation of a main lens from a focus position with respect to an object by using, as a focus detecting element, an AF element for phase difference detection, the AF element being different from the imaging element used to image an object. Accordingly, the main lens can be quickly positioned to the focus target position, and implementation of high speed auto-focusing is achieved (see Japanese Patent Application Publication No. 62-182703).

Moreover, an imaging apparatus as follows is proposed. In the imaging apparatus, the image-forming light flux obtained through the main lens is guided to both the AF element for phase difference detection and the imaging element used to image an object, and both of the AF element and the imaging element are used to achieve high focusing-state detection accuracy (see Japanese Patent Application Publication No. 2006-251065).

However, since this imaging apparatus needs a space for disposing the light flux separation part in the imaging apparatus, there is a problem that the imaging apparatus has a larger in size.

Further, also known is an imaging apparatus in which a mirror as a light flux separation part is arranged in the course of an imaging optical path of an imaging optical system to guide an image-forming light flux to a finder or a phase difference method AF element (Japanese Patent Application Publication No. 9-166803).

In this imaging apparatus, the mirror is disposed obliquely to an. imaging optical axis when imaging, and disposed perpendicularly to the imaging optical axis when not imaging.

With this imaging apparatus, it is possible to reduce in size of an imaging apparatus in which a movable lens-barrel is stored, by making a space occupied by the mirror smaller when not imaging.

However, in this imaging apparatus, a larger space needs to be secured which is occupied by a dedicated optical system for guiding the image-forming light flux to the phase difference method AF element and by the AF element itself. Thus, reduction in size of the imaging apparatus is limited.

Namely, the conventional imaging apparatus has problems that high speed auto-focusing is sacrificed when the size of the imaging apparatus is reduced, and that reduction in size of the imaging apparatus is sacrificed when high speed auto-focusing is achieved.

An object of the present invention is to provide an imaging apparatus that can achieve both high speed auto-focusing and further reduction in size of the imaging apparatus.

To accomplish the above object, an imaging apparatus according to one embodiment of the present invention includes an imaging optical system configured to form an image-forming light flux of an object, an imaging element configured to receive the image-forming light flux and to output image information, a movable lens-barrel configured to be reciprocatable between a stored position where the movable lens barrel is stored in the imaging apparatus and an extended position where the movable-lens barrel is extended from the imaging apparatus, a focus detecting part configured to receive the image forming light flux and to output focus information of the object, a light flux separation part configured to separate the image-forming light flux and guide the separated image-forming light fluxes to the imaging element and the focus detecting part, a movable holding part configured to movably hold the light flux separation part and the focus detecting part among a first position where the light flux separation part is disposed on an optical axis of the imaging optical system between the movable lens-barrel and the imaging element to separate the image-forming light flux and the separated image-forming light flux is received by the focus detecting part, a second position where the light flux separation part is retracted from the optical axis and the image-forming light flux is guided to the imaging element and a third position where the light flux separation part and the focus detecting part are retracted from a space, which is occupied by the movable lens barrel when being in the stored position, and a switching part configured to switch among a first state in which the movable lens barrel is in the extended position and the light flux separation part and the focus detecting part are in the first position, a second state in which the movable lens barrel is in the extended position and the light flux separation part and the focus detecting part are in the second position, and a third state in which the movable lens barrel is in the stored position and the light flux separation part and the focus detecting part.
FIG. 1 is a front view of an imaging apparatus according to the present invention;
FIG. 2 is a block diagram showing a schematic configuration of a circuit of the imaging apparatus shown in FIG. 1;
FIGs. 3A and 3B are schematic diagrams each showing an internal configuration of the imaging apparatus shown in FIG. 1, in which FIG. 3A is a schematic diagram showing a state where a movable lens-barrel is stored within the imaging apparatus, and FIG. 3B is a schematic diagram showing an arrangement position relationship when each component shown in FIG. 3A is observed from the front of the imaging apparatus;
FIGs. 4A and 4B are schematic diagrams each showing an internal configuration of the imaging apparatus shown in FIG. 1, in which FIG. 4A is a schematic diagram showing a state where the movable lens-barrel shown in FIGs. 3A and 3B extends from the imaging apparatus and a focus lens enters a imaging optical path, and FIG. 4B is a schematic diagram showing an arrangement position relationship when each component shown in FIG. 4A is observed from the front of the imaging apparatus;
FIGs. 5A and 5B are schematic diagrams each showing an internal configuration of the imaging apparatus shown in FIG. 1, in which FIG. 5A is a schematic diagram showing a state where a focus detecting element shown in FIGs. 4A and 4B is disposed in a first posture and the light flux separation part is disposed in a first posture, and FIG. 5B is a schematic diagram showing an arrangement position relationship when each component shown in FIG. 5A is observed from the front of the imaging apparatus;
FIGs. 6A to 6C each shows a detailed structure of a driving mechanism of the light flux separation part shown in FIG. 3A to FIG. 5B, in which FIG. 6A is an explanatory view showing the light flux separation part and the focus detecting element in a third state, FIG. 6B is an explanatory view showing the light flux separation part and the focus detecting element in a second state, and FIG. 6C is an explanatory view showing the light flux separation part and the focus detecting element in a first state;
FIG. 7 is a flow chart illustrating a process performed when a power supply of the imaging apparatus according to embodiment 1 of the present invention is turned on;
FIG. 8 is a flow chart illustrating a process performed when a shutter button of the imaging apparatus according to embodiment 1 of the present invention is half pressed;
FIG. 9 is a flow chart illustrating a process performed when the shutter button of the imaging apparatus according to embodiment 1 of the present invention is fully pressed;
FIG. 10 is a flow chart illustrating a process performed when the power supply of the imaging apparatus according to embodiment 1 of the present invention is turned off;
FIGs. 11A and 11B each shows a modification of a camera according to embodiment 1 of the present invention, in which FIG. 11A is a diagram showing a relationship between a Y-signal integrated value obtained by a focus detecting element and an angle of a light flux separation part to a imaging optical axis, and FIG. 11B is a diagram showing a relationship between a Y-signal integrated value obtained by a CCD and an angle of the light flux separation part to the imaging optical axis;
FIG. 12 is an explanatory view showing a state of adjusting the light flux separation part on the basis of the Y-signal integrated value shown in FIG. 11;
FIG. 13 is an explanatory view of an imaging apparatus according to embodiment 2 of the present invention, and is an explanatory view showing a state where a focus detecting element and a CCD has no conjugation relation;
FIG. 14 is a flow chart illustrating a process performed when a shutter button of the imaging apparatus in FIG. 13 is half pressed;
FIG. 15 is an explanatory view of an imaging apparatus according to embodiment 3 of the present invention, and is a schematic diagram showing an optical system in which a focus detecting element is formed of a microlens array plate and a CCD;
FIG. 16 is a perspective view showing an example of the focus detecting element formed of the microlens array plate and the CCD shown in FIG. 15;
FIGs. 17A and 17B are explanatory views each for describing function of a microlens array of the microlens array plate shown in FIG. 15, in which FIG. 17A is an optical diagram for describing a relationship between a focus lens, a microlens, each of pixels, and incident light, and FIG. 17B is a plan view for describing a relationship of the microlens shown in FIG. 17A and a pixel region;
FIG. 18 is a schematic view for describing a principle of focus detection with a focus detecting element formed of a microlens array and an imaging element;
FIG. 19 is a schematic view for describing a principle of focus detection with a focus detecting element formed of a microlens array and an imaging element, and is an explanatory view showing a relationship between microlenses and pixels, respectively;
FIG. 20 is a correspondence table showing a relationship between the microlens shown in FIG. 19 and an incident light flux entered through this microlens;
FIG. 21 is a schematic view for describing a principle of focus detection with a focus detecting element formed of a microlens array and an imaging element, and is a diagram for describing a relationship between a pixel and light to be entered through a microlens when a focus lens is focused on a object;

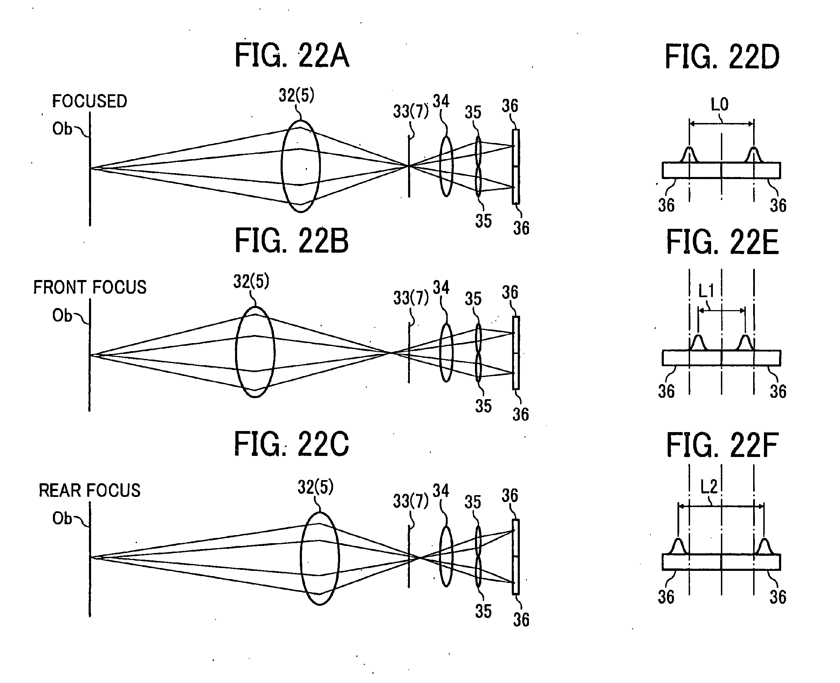

FIGs. 22A to 22F are schematic views each showing an example of focus detection in accordance with a conventional phase difference method, in which FIG. 22A shows a state where a focus lens is focused on a object, FIG. 22B shows a state where the focus lens is focused on a position front of the object, FIG. 22C shows a state where a focus lens is focused on a position rear of the object, FIG. 22D shows an image interval between object images on respective line sensors shown in FIG. 22A, FIG. 22E shows an image interval between object images on the respective line sensors shown in FIG. 22B, and FIG. 22F shows an image interval between object images on the respective line sensors shown in FIG. 22C;
FIG. 23 is a diagram for describing operation when a half mirror is used as an optical separation part;
FIG. 24 is an explanatory view of screen separation when auto-focusing is performed in accordance with a contrast method;
FIG. 25 is a flow chart for describing an embodiment in which auto-focusing using a focus detecting element in accordance with a phase difference method and auto-focusing using a CCD in accordance with a contrast method are used together;
FIGs. 26A to 26C are explanatory views each showing an example of a face recognition process according to embodiment 5 of the present invention, in which FIG. 26A shows a state where a face determination rectangle is set on a screen, FIG. 26B shows a state where a feature region is set in the face determination rectangle, and FIG. 26C is a diagram for describing calculation on the feature region; and
FIG. 27 is a flow chart for describing focus determination on an area obtained by execution of the face recognition process shown in FIGs. 26A to 26C.

Hereinafter, embodiments of an imaging apparatus according to the present invention will be described with reference to the drawings.

### [Embodiments]

### (Embodiment 1)

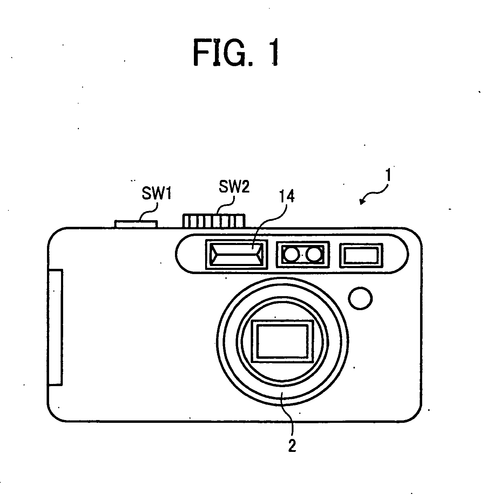

FIG. 1 is a front view of a digital camera as an imaging apparatus to which the present invention is applied.

A shutter button SW1, a mode dial SW2, and a sub LCD (not shown) are disposed in an upper portion of an imaging apparatus 1. A movable lens-barrel 2, an optical finder (referential numeral is omitted), and a flash light-emitting part 14 and the like are provided on the front surface of the imaging apparatus 1.

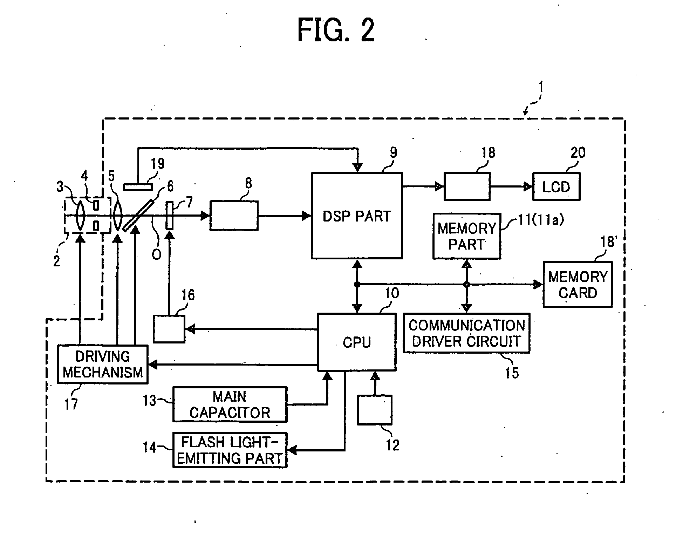

A zoom lens system 3 that forms a part of an imaging optical system configured to form an image-forming light flux of an object and a mechanical shutter 4 used also as an aperture are provided in the movable lens-barrel 2, as shown in FIG. 2. A focus lens 5 that cooperates with the imaging optical system to form an image-forming light flux, a light flux separation part 6 formed of, for example, a half mirror, and a CCD 7 as an imaging element such as an image pickup device or the like used to image an object are provided in the imaging apparatus 1. In this embodiment 1, as long as the light flux separation part 6 is formed to reflect at least a part of the image-forming light flux to a focus detecting element 19 such as a focus detecting part described later, the light flux separation part 6 is not limited to the half mirror.

The CCD 7 is configured to receive the image-forming light flux and to output image information.

The movable lens-barrel 2 is configured to hold the imaging optical system and to be reciprocatable between a stored position where the movable lens barrel 2 is stored in the imaging apparatus 1 and an extended position where the movable-lens barrel 2 is extended from the imaging apparatus 1.

The focus detecting part 19 is configured to receive the image forming light flux and to output focus information of the object.

The light flux separation part 6 configured to separate the image forming light flux and guide the separated image-forming light fluxes to the imaging element 7 and the focus detecting part 19.

The CCD 7 is arranged perpendicularly to an imaging optical axis O. The image-forming light flux forms an image on this CCD 7. The CCD 7 photoelectrically convert the image-forming light flux that forms an image, and outputs the image-forming light flux as a video signal to a known circuit 8 at a subsequent stage. This circuit 8 performs correlated double sampling of the inputted video signal to convert the video signal to a digital signal, and subsequently, outputs the digital signal to a known digital signal processor (DSP) part 9 as pixel data.

The digital signal processor (DSP) part 9 performs known processes such as a process to convert the pixel data into luminance data Y, color difference data U and V, and a process to compress the YUV data using the JPEG method.

The digital signal processor (DSP) part 9 is controlled by a central processing circuit (CPU) 10 as a controller. This CPU 10 has function to generally control the entire imaging apparatus. For example, the CPU 10 controls a memory part 11 as a recording medium (storage part), an operation switch part 12 that can be operated by a camera user, a main capacitor 13 for emitting light of the flash, the flash light-emitting part 14, a communication driver circuit 15, a CCD drive circuit 16, a driving mechanism 17, a memory card 18' as a recording medium that can be attachably detached from the imaging apparatus 1, and the like.

The memory part 11 has, for example, function to temporarily store the pixel data processed by the digital signal processor (DSP) part 9 and to read data read from an image file such as the memory card 18', and also has function as a working memory for the digital signal processor (DSP) part 9 and the CPU 10.

The CPU 10 detects charge voltage of the main capacitor 13. The CPU 10 also controls light emittance and stop of light emittance of the flash light-emitting part 14.

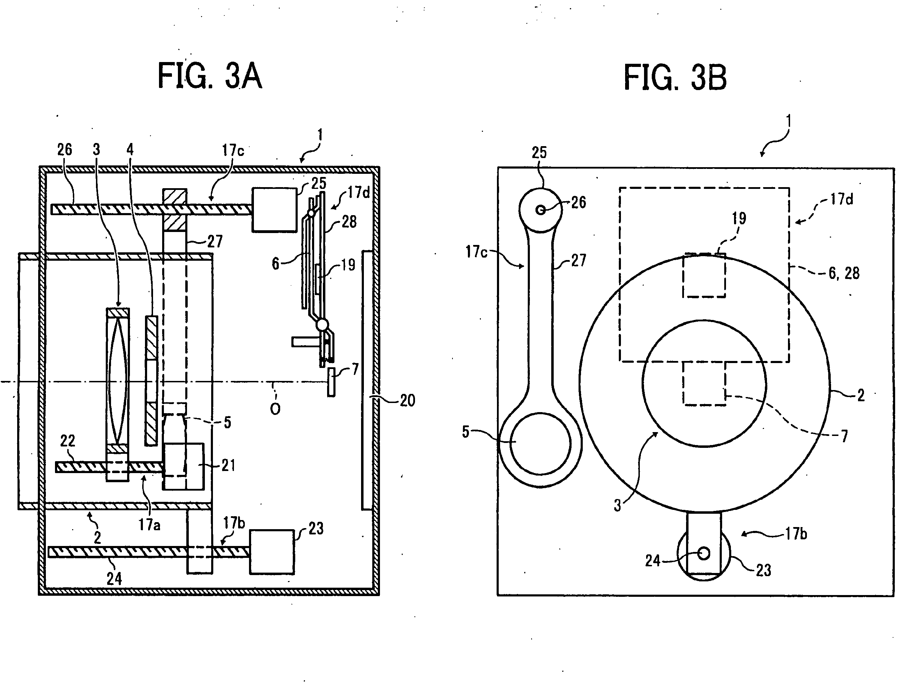

An LCD display controller 18 and a focus detecting element 19 used to detect focusing of an object are connected to the digital signal processor (DSP) part 9. An LCD 20 (see FIGs. 3A, 3B) provided on the rear surface of the imaging apparatus 1 is connected to the LCD display controller 18.

The LCD display controller 18 has function to convert the pixel data obtained through the digital signal processor (DSP) part 9 into data that can be displayed on the LCD 20. The LCD 20 can display the pixel data obtained through the digital signal processor (DSP) part 9 as a through-the-lens image in the imaging optical system.

The circuit 8, the digital signal processor (DSP) part 9, the CPU 10, the memory part 11, the main capacitor 13, the communication driver circuit 15, and the CCD drive circuit 16 are provided within the imaging apparatus 1.

As shown in FIGs. 3A, 3B, the driving mechanism 17 is formed of a driving mechanism 17a that drives the zoom lens system 3, a driving mechanism (not shown) that drives the mechanical shutter 4, a driving mechanism 17b that drives the movable lens-barrel 2, a driving mechanism 17c that drives the focus lens 5, a base part or a base member 28 as a movable holding part to be described later, and a driving mechanism 17d that drives the light flux separation part 6.

The driving mechanism 17a is mainly formed of a driving motor 21 and a lead screw 22. The drive motor 21 and the lead screw 22 reciprocate the zoom lens system 3 in a direction of the optical-axis O of the imaging optical system. Description of driving of the mechanical shutter 4 will be omitted.

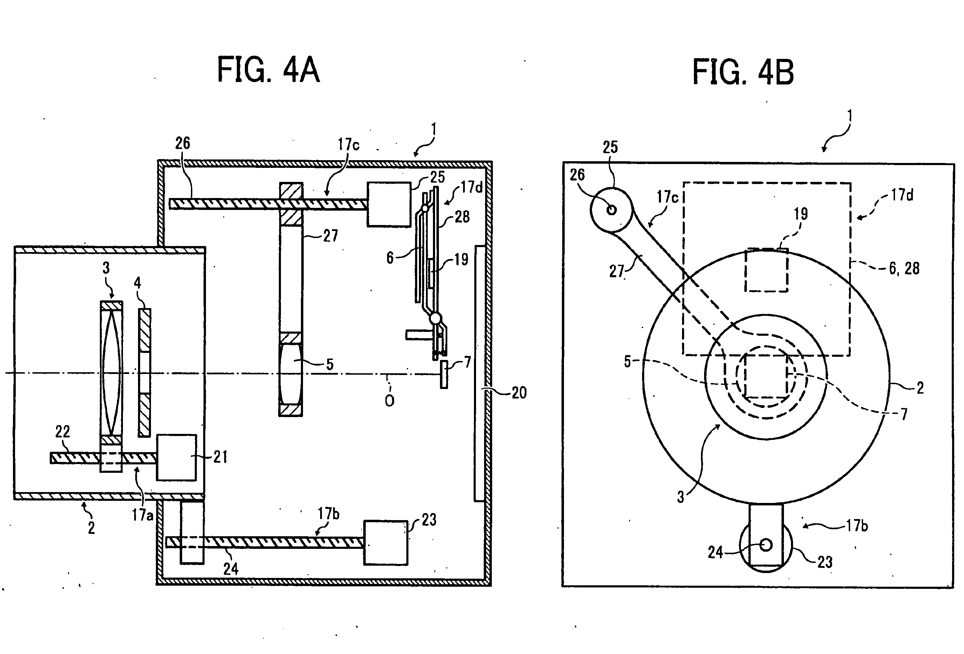

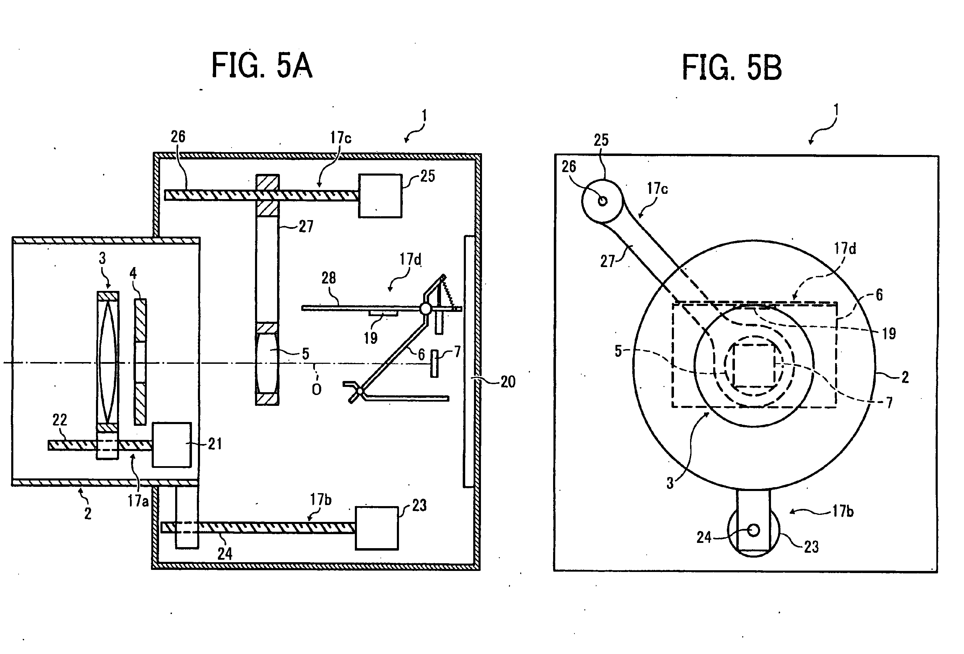

The driving mechanism 17b is mainly formed of a driving motor 23 and a lead screw 24. The driving motor 23 and the lead screw 24 reciprocate the movable lens-barrel 2 between a stored position (see FIGs. 3A, 3B) where the movable lens-barrel 2 is stored in the imaging apparatus 1, and an extended position (see FIGs. 4A, 4B, 5A and 5B) where the movable lens-barrel 2 extends from the imaging apparatus 1.

The driving mechanism 17c is formed of a driving motor 25, a lead screw 26, an arm 27 with a cam, a torsion spring (not shown, a position detector (not shown) that detects a position of the focus lens 5 in a direction of the imaging optical axis O, and the like. The focus lens 5 is provided at an end of the arm 27 with a cam (for example, see Japanese Patent Application Publication No. 2006-250976).

When the movable lens-barrel 2 is in the stored position, as shown in FIGs. 3A and 3B, the focus lens 5 is retreated from the stored position of the movable lens-barrel 2, and is moved to a retreated position in the optical axis direction (position on a side of the CCD 7). Moreover, when the movable lens-barrel 2 is in the extended position, the focus lens 5 is inserted in a imaging optical path between the movable lens-barrel 2 and the CCD 7 as shown in FIGs. 4A, 4B, 5A and 6B, and is moved in the direction of the movable lens-barrel 2.

The driving mechanism 17c works as a focus state changing part configured to change a focus state of the object in the image information by moving a part of optical elements of the imaging optical system based on the focus information output from the focus detecting part 19.

The optical element moved by the focus state changing part 17c may be a focus lens 5. The CPU 10 controls the focus lens 5 such that the focus lens 5 is retracted from the optical axis when the movable lens barrel 2 is in the stored position and moved onto the optical axis when the movable lens barrel 2 is in the extended position. The CPU 10 controls the focus lens 5 and the light flux separation part 6 such that the focus lens 5 is extended in an extending direction of the movable lens barrel 2 when the movable lens barrel 2 is in the extended position and the light flux separation part 6 is moved onto the optical axis.

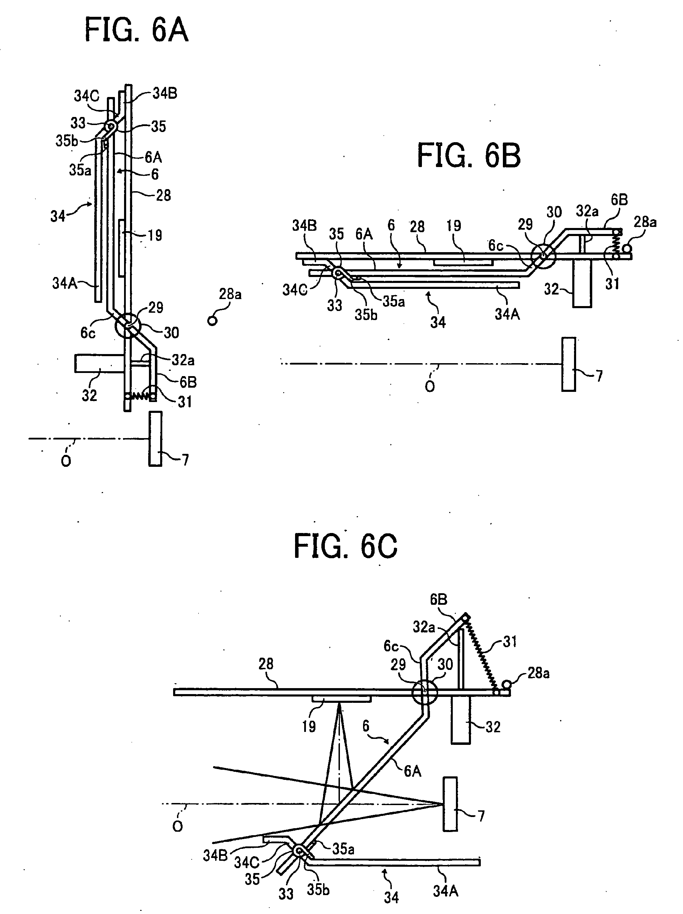

The driving mechanism 17d is used to change a state of the light flux separation part 6 and the focus detecting element 19 from a first state to a third state (corresponding to the following first position to third position), which will be described later. Before describing change of the state of the light flux separation part 6 and the focus detecting element 19, a schematic configuration of the driving mechanism 17d will be described with reference to FIGs. 6A to 6C.

The focus detecting element 19 is fixed on one surface of the base part 28. This base part 28 is pivotally supported by the imaging apparatus 1 with a shaft portion 29 as an axis portion. The driving mechanism 17d for the base part 28 has a driving motor 30. The drive motor 30 is fixed to the imaging apparatus 1.

The base member 28 is rotatably disposed about the axis portion 29 in relation to the imaging apparatus 1 and the focus detecting part 19 is fixed to the base member 28. The light flux separation part 6 has an image forming light flux separation portion 6A disposed at a side so as to be moved on the optical axis and a biasing portion 6B disposed at an opposite side across the axis portion so as to bias the light flux separation part 6 in directions toward (and away from) the focus detecting part 19. The light flux separation part 6 is rotatably disposed about the axis portion 29. The base member 28 is configured to rotate between the first position and the third position.

A spring 31 is provided between the base member 28 and the biasing portion 6B configured to bias the light flux separation part 6 in a direction where the light flux separation part 6 is moved to the second position. The light flux separation part 6 has a biasing device 32 such as an actuator configured to bias the biasing portion in a direction where the light flux separation part 6 is moved to the first position against the biasing of the spring 31.

An output axis (not shown) of the drive motor 30 is directly connected to this shaft portion 29, and by transmitting rotation of the driving motor 30 to the shaft portion 29, the base part 28 pivots around the shaft portion 29. The pivoted posture of the base part 28 is regulated to be a posture substantially parallel to the imaging optical axis O by a stopper bar 28a.

The base part 28 is configured to movably hold the light flux separation part 6 and the focus detecting part 19 among a first position where the light flux separation part 6 is disposed on an optical axis of the imaging optical system between the movable lens-barrel 2 and the imaging element 7 to separate the image-forming light flux and the separated image-forming light flux is received by the focus detecting part 19, a second position where the light flux separation part 6 is retracted from the optical axis and the image-forming light flux is guided to the imaging element 7 and a third position where the light flux separation part 6 and the focus detecting part 19 are retracted from a space, which is occupied by the movable lens barrel when being in the stored position, in the third position. The CPU 10 is configured to control positions of the movable lens-barrel 2 and the base part 28.

The imaging apparatus 1 further includes a switching part which is, for example, composed of the CPU 10, the driving mechanism 17, and the like, and is configured to switch among a first state in which the movable lens barrel 2 is in the extended position and the light flux separation part 6 and the focus detecting part 19 are in the first position, a second state in which the movable lens barrel 2 is in the extended position and the light flux separation part 6 and the focus detecting part 19 are in the second position, and a third state in which the movable lens barrel 2 is in the stored position and the light flux separation part 6 and the focus detecting part 19. Imaging may be performed in the second state.

The imaging element 7 is disposed perpendicular to the optical axis of the imaging optical system. In the first position, the light flux separation part 6 is obliquely disposed in relation to the optical axis and the focus detecting part 19 is disposed substantially parallel to the optical axis. In the second position, the light flux separation part 6 and the focus detecting part 19 are disposed substantially parallel to the optical axis. In the third position, the focus detecting part 19 and the light flux separation part 6 are disposed substantially perpendicular to the optical axis.

The light flux separation part 6 is pivotally provided on the shaft portion 29. The light flux separation part 6 is divided at the shaft portion 29. The light flux separation part 6 has an image-forming light flux separation portion 6A on one side thereof, the image-forming light flux separation portion 6A being inserted in an imaging optical path described later. The light flux separation part 6 also has a biasing portion 6B on the other side thereof, the biasing portion 6B biasing the image-forming light flux separation portion 6A in a direction that the image-forming light flux separation portion 6A approaches to the focus detecting element 19.

The image-forming light flux separation portion 6A is disposed on the one surface side of the base part 28 and the biasing portion 6B is disposed on the other surface side of the base part 28. Between the image-forming light flux separation portion 6A and the biasing portion 6B, a connection inclined portion 6c that connects the image-forming light flux separation portion 6A and the biasing portion 6B is provided. The shaft portion 29 is configured to penetrate this connection inclined portion 6c.

A tension coil spring 31 is extended across the biasing portion 6B and the other surface side of the base part 28. This tension coil spring 31 is configured to bias the image-forming light flux separation portion 6A in the direction that the image-forming light flux separation portion 6A approaches the one surface side of the base part 28.

The actuator (drive unit) 32 is fixed to the base part 28. An end of an advancing/retreating rod 32a of the actuator 32 contacts the biasing portion 6B. When the advancing/retreating rod 32a is extended from the actuator 32, the light flux separation part 6 is configured to pivot around the shaft portion 29 in a direction that the image-forming light flux separation portion 6A is moved away from the one surface side of the base part 28.

The image-forming light flux separation portion 6A has a shaft portion 33. The light flux separation part 6 has a stray light prevention part 34 configured to prevent stray light due to reflection of the light flux separation part 6 from entering the imaging element 7 when the light flux separation part 6 is in the second position. The stray light prevention part 34 is configured to be retracted from the optical axis when the light flux separation part 6 is in the first position. A stray light prevention part 34 is pivotally provided on this shaft portion 33. When the shaft portion 33 is defined as a border, the stray light prevention part 34 has a light shielding plate portion 34A that covers the image-forming light flux separation portion 6A on one side thereof, and has a contact plate portion 34B that contacts the base part 28 on the other side thereof. Between the light shielding plate portion 34A and the contact plate portion 34B, a connection inclined portion 34C that connects these portions are provided. The shaft portion 33 penetrates the connection inclined portion 34C.

That is, the stray light prevention part 34 is rotatably provided via the axis portion 29 on the image forming light flux separation portion 6A. The stray light prevention part 34 includes a spring 35 configured to retract the stray light prevention part 34 from the optical axis when the light flux separation part 6 is in the first position, and to bias the stray light prevention part 34 in a direction toward the base member 28 when the light flux separation part 6 is in the second and third positions.

A torsion coil spring 35 is wound around the shaft portion 33. One end part 35a of this torsion coil spring 35 contacts the image-forming light flux separation portion 6A, and the other end 35b of this torsion coil spring 35 contacts the stray light prevention part 34. The torsion coil spring 35 biases the stray light prevention part 34 and the image-forming light flux separation portion 6A in a direction that the stray light prevention part 34 and the image-forming light flux separation portion 6A are moved away from each other.

Next, the embodiment of the imaging apparatus according to the present invention will be described with reference to the drawings.

When a power switch of the imaging apparatus (digital camera) is off and is in a non-imaging state, the movable lens-barrel 2 is in the stored position where the movable lens-barrel 2 is stored in the imaging apparatus 1, as shown in FIGs. 3A and 3B.

When the movable lens-barrel 2 is in the stored position, a position state of the focus lens 5 is in the retreated position in the optical axis direction as shown in FIG. 3A, and is retreated from the imaging optical path as shown in FIG. 3B.

When the movable lens-barrel 2 is in the stored position, a position state of the base part 28 is in the third state in which both the light flux separation part 6 and the focus detecting element 19 are substantially perpendicular to the imaging optical axis O, and are retreated from the stored position of the movable lens-barrel 2.

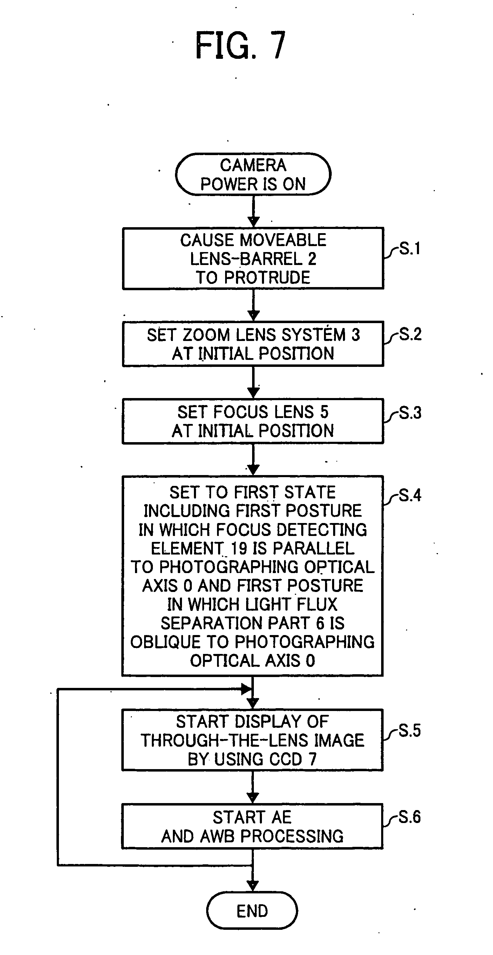

When the power switch of the imaging apparatus (digital camera) is turned on, as shown in FIG. 4A, the movable lens-barrel 2 is moved along the imaging optical axis O, extends from the stored position, and is set at a predetermined extended position in accordance with control of the CPU 10 (see Step S.1 of FIG. 7). Next, the zoom lens system 3 is set at an initial position (see Step S.2 of FIG. 7). Subsequently, the focus lens 5 is inserted in the imaging optical path between the movable lens-barrel 2 and the CCD 7 as shown in FIG. 4B (see Step S.3 of FIG. 7). Then, the focus lens 5 advances in the direction of the movable lens-barrel 2, and is set at an initial position, as shown in FIG. 5A. Thereafter, in accordance with control of the CPU 10, the position state of the base part 28 changes from a state shown in FIG. 6A into a state shown in FIG. 6B by using the shaft portion 29 as a fulcrum (see Step S.4 of FIG. 7). Thereby, the focus detecting element 19 has a first posture in which the focus detecting element 19 is disposed substantially parallel to the imaging optical axis O, and the light flux separation part 6 has a second posture in which the light flux separation part 6 is disposed substantially parallel to the imaging optical axis O.

Next, in accordance with control of the CPU 10, the advancing/retreating rod 32 extends by a predetermined amount, and the light flux separation part 6 pivots counterclockwise around the shaft portion 29 against an urging force of the tension coil spring 31.

This counterclockwise pivotal movement changes the light flux separation part 6 from the second posture in which the light flux separation part 6 is disposed substantially parallel to the imaging optical axis O as shown in FIG. 6B to the first posture in which the light flux separation part 6 is disposed obliquely to the imaging optical axis O on the imaging optical path between the focus lens 5 and the CCD 7 as shown in FIG. 6C and FIGs. 5A and 5B (see Step S.4 of FIG. 7). When the light flux separation part 6 has the first posture in which the light flux separation part 6 is disposed obliquely to the imaging optical axis O, the focus detecting element 19 and the CCD 7 are substantially in an optical conjugate position with respect to the light flux separation part 6.

The contact plate portion 34B of the stray light prevention part 34 is moved away from the base part 28 along with the counterclockwise pivotal movement of the light flux separation part 6, as shown in FIG. 6C. Thereby, the urging force of the torsion coil spring 35 causes the stray light prevention part 34 to pivot around the shaft portion 33 clockwise. Following this, the light shielding plate portion 34A is moved away from the image-forming light flux separation portion 6A.

As a result, a part of the image-forming light flux formed by collaboration of the imaging optical system and the focus lens 5 is reflected by the light flux separation part 6, and guided to the focus detecting element 19. Moreover, other light flux except the above-mentioned part of the image-forming light flux transmits through the light flux separation part 6 to be guided to the CCD 7.

Namely, when the movable lens-barrel 2 is in the extended position and is in a state where imaging is possible, the position state of the light flux separation part 6 and the focus detecting element 19 is in the first state where the light flux separation part 6 is disposed on the imaging optical path between the movable lens-barrel 2 and the CCD 7 to reflect a part of the image-forming light flux and guides the part of the image-forming light flux to the focus detecting element 19, and transmits other light flux except the part of image-forming light flux to guide the other light flux to the CCD 7, so that the focus detecting element 19 receives the part of image-forming light flux reflected by the light flux separation part 6.

The image-forming light flux is guided to the CCD 7, photoelectrically converted, and inputted into the digital signal processor (DSP) part 9 as the pixel data. The digital signal processor (DSP) part 9 appropriately processes the inputted pixel data, and outputs the processed data to the LCD display controller 18. The LCD display controller 18 converts the pixel data to image data that can be displayed on the LCD 20, and displays the image data on the LCD 20. Thereby, a through-the-lens image of the imaging optical system is displayed on the LCD 20 (see Step S.5 of FIG. 7).

Subsequently, the CPU 10 executes automatic exposing processing (AE) and white balance processing (AWB) (see Step S.6 of FIG. 7). Then, when the power switch of the imaging apparatus (digital camera) is ON, the processes at Step S.5 and Step S.6 are repeated.

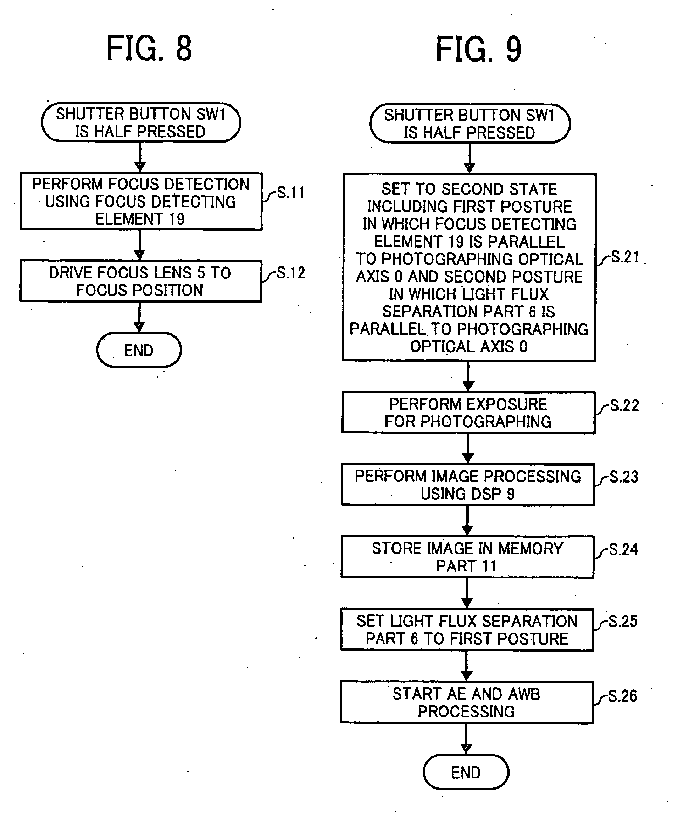

When the position state of the light flux separation part 6 and the focus detecting element 19 is the first state and the shutter button SW1 is half pressed, the focus detecting element 19 executes focus detection. Namely, the CPU 10 executes focus detection in accordance with the phase difference method on the basis of a focus detection signal from the focus detecting element 19 (see Step S.11 of FIG. 8). Then, the CPU 10 controls the driving mechanism 17c so that the focus lens 5 may be set at a focus target position (see Step S.12 of FIG. 8).

Subsequently, when the shutter button SW1 is fully pressed, the advancing/retreating rod 32a is contracted, and the urging force of the tension coil spring 31 causes the light flux separation part 6 to pivot around the shaft portion 29 clockwise in accordance with control of the CPU 10. Thereby, the light flux separation part 6 changes from the first posture in which the light flux separation part 6 is disposed obliquely to the imaging optical axis O as shown in FIG. 6C to the second posture in which the light flux separation part 6 is disposed substantially parallel to the imaging optical axis, as shown in FIG. 6B.

When the posture of the light flux separation part 6 is changed from the first posture to the second posture, the contact plate portion 34B of the stray light prevention part 34 contacts the one surface side of the base part 28. A pressure applied to the contact plate portion 34B causes the stray light prevention part 34 to pivot counterclockwise around the shaft portion 33 against the urging force of the torsion coil spring 35. Thereby, the image-forming light flux separation portion 6A is covered with the light shielding plate portion 34A (see Step S.21 of FIG. 9). Moreover, the urging force that biases the stray light prevention part 34 clockwise is accumulated in the torsion coil spring 35.

Then, imaging (exposing treatment) is executed in accordance with control of the CPU 10 (see Step S.22 of FIG. 9). Subsequently, the digital signal processor (DSP) part 9 executes a predetermined image processing in accordance with control of the CPU 10 (see Step S.23 of FIG. 9). Then, the taken image is stored in the memory part 11, the memory card 18', or the like as a recording medium (see Step S.24 of FIG. 9).

Subsequently, in accordance with control of the CPU 10, the advancing/retreating rod 32a extends, and the light flux separation part 6 changes from the second posture shown in FIG. 6B to the first posture shown in FIG. 6C (see Step S.25 of FIG. 9). Then, the AE processing and the AWB processing are executed in accordance with control of the CPU 10 (see Step S.26 of FIG. 9), and the process moves to S.6 of FIG. 7.

Namely, when the movable lens-barrel 2 is in the extended position and imaging is executed, the position state of the light flux separation part 6 and the focus detecting element 19 is changed to the second state where the light flux separation part 6 is retreated from the imaging optical path and the image-forming light flux is guided to the CCD 7 as it is. The position state of the light flux separation part 6 and the focus detecting element 19 is again changed to the first state at the same time when imaging is completed.

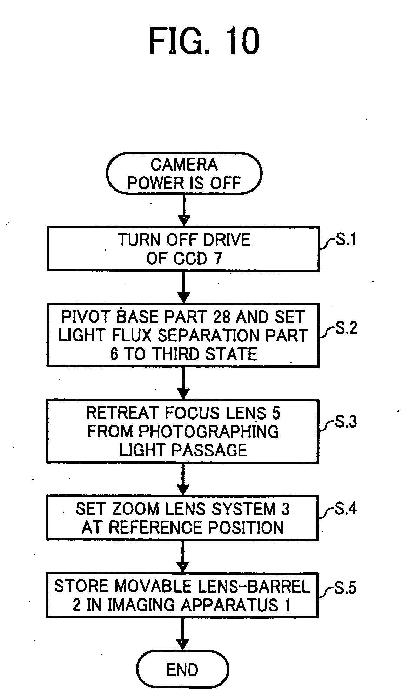

When the power supply of the imaging apparatus is turned off, drive of the CCD 7 is turned off (see Step S.1 of FIG. 10). Moreover, in accordance with control of the CPU 10, the driving mechanism 17d pivots the base part 28 around the shaft portion 29 clockwise in FIGs. 6A to 6C. Thereby, the base part 28 and the light flux separation part 6 are retreated from the stored position of the movable lens-barrel 2 (see Step S.2 of FIG. 10). Subsequently, in accordance with control of the CPU 10, the driving mechanism 17c moves the focus lens 5 in the direction of the CCD 7, and retreats the focus lens 5 from the imaging optical path (see Step S.3 of FIG. 10). Then, the zoom lens system 3 is set at a reference position (see Step S.4 of FIG. 10). Thereafter, the driving mechanism 17b stores the movable lens-barrel 2 in the stored position in accordance with control of the CPU 10 (see Step S.5 of FIG. 10).

Namely, when the movable lens-barrel 2 is in the stored position, the position state of the light flux separation part 6 and the focus detecting element 19 is changed into the third state where the light flux separation part 6 and the focus detecting element 19 are substantially parallel to each other and retreated from the stored position of the movable lens-barrel 2.

### (Modified Example)

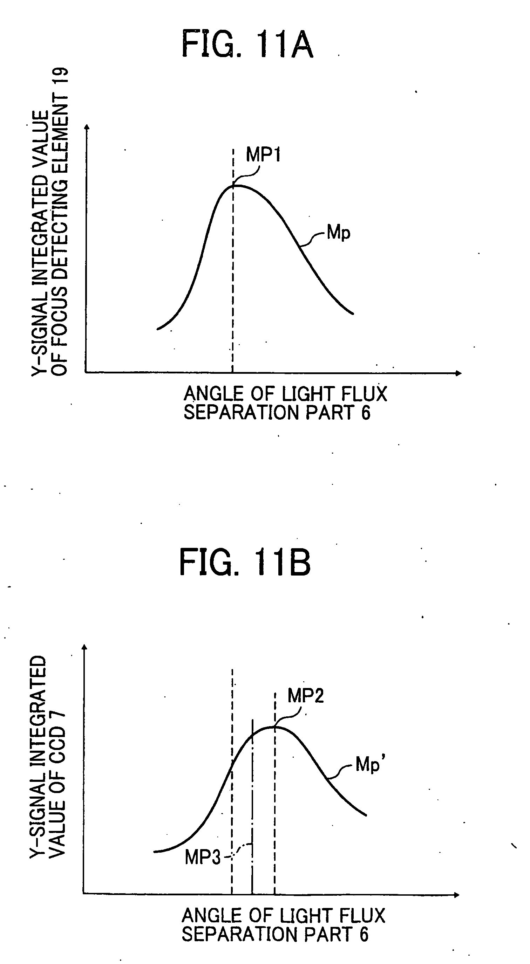

In Embodiment 1, the advancing/retreating rod 32 is extended and retreated by a predetermined amount so that the light flux separation part 6 is set to the first posture in which the light flux separation part 6 is maintained to be oblique to the imaging optical axis O at a fixed angle. Even in a case where conjugate relationship between the CCD 7 and the focus detecting element 19 is deviated due to change in a temperature of an environment, the conjugate relationship between the CCD 7 and the focus detecting element 19 can be corrected by adopting a configuration in which the extending amount of the advancing/retreating rod 32 is controlled while changing the posture of the half mirror 6 from the second posture (see FIG. 6B) to the first posture (see FIG. 6C) by performing a process shown in FIGs. 11A and 11B.

Namely, the CPU 10 monitors the focus detection signal from the focus detecting element 19 as light receiving information while changing the posture of the half mirror 6 from the second posture shown in FIG. 6B to the first posture shown in FIG. 6C, and executes a process to acquire a Y-signal integrated value curve Mp to an angle of the light flux separation part 6 as shown in graph A of FIGs. 11A and 11B. Similarly, the CPU 10 monitors an output signal from the CCD 7 as light receiving information, and acquires a Y-signal integrated value curve Mp' to an angle of the light flux separation part 6 in accordance with the contrast method as shown in graph B of FIGs. 11A and 11B.

Usually, at the time of assembly of the imaging apparatus, an angle of the light flux separation part 6 to a peak value MP1 of the Y-signal integrated value curve Mp acquired by the focus detecting element 19 coincides with an angle of the light flux separation part 6 to a peak value P2 of the Y-signal integrated value curve Mp' acquired by the CCD 7, because the CCD 7 and the focus detecting element 19 are in the conjugation relation with respect to the light flux separation part 6.

However, when the imaging apparatus 1 expands or contracts for a certain reason, for example, due to change of an environmental temperature, a positional relation of the focus detecting element 19 and the CCD 7 may deviate. Then, deviation may occur between the angle of the light flux separation part 6 to the peak value MP1 of the Y-signal integrated value curve Mp acquired by the focus detecting element 19 and the angle of the light flux separation part 6 to the peak value MP2 of the Y-signal integrated value curve Mp' acquired by the CCD 7, as shown in graph A and graph B of FIGs. 11A and 11B, respectively.

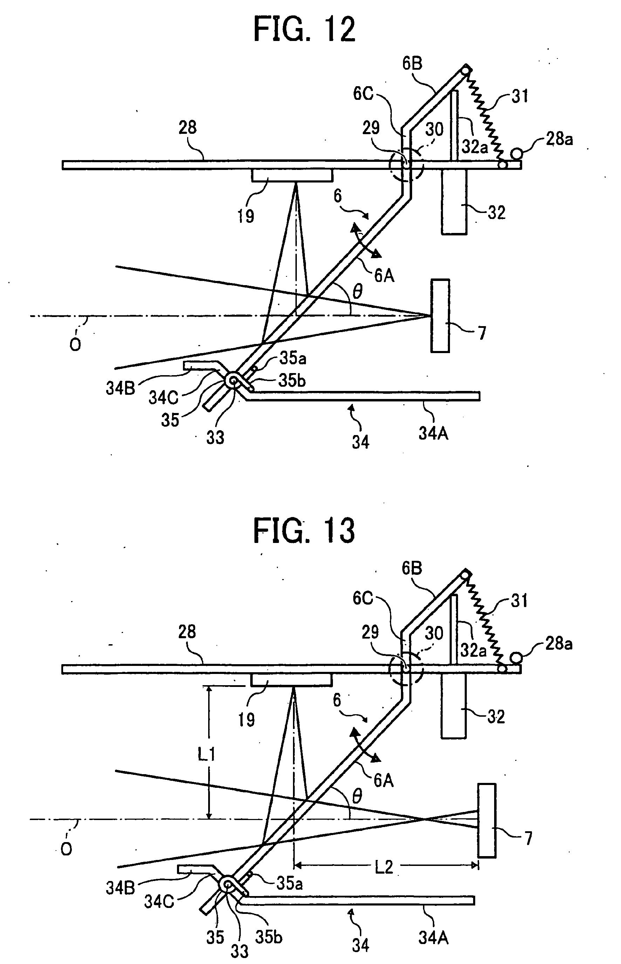

Even in such a case, a configuration may be adopted in which an angleθ of the light flux separation part 6 to the imaging optical axis O is finely adjusted as shown in FIG. 12 by controlling the amount of extension and contraction of the advancing/retreating rod 32a, thereby adjusting and stopping the light flux separation part 6 at a proper angle. In such configuration, the angle of the light flux separation part 6 to the peak position MP1 acquired by the focus detecting element 19 can coincide with the angle of the light flux separation part 6 to the peak position MP2 acquired by the CCD 7, as shown by a referential numeral MP3 in graph B of FIGs. 11A and 11B.

Moreover, a configuration may be adopted in which the CPU 10 monitors the focus detection signal of the focus detecting element 19, and executes the process to acquire the peak of the Y-signal integrated value to the angle of the light flux separation part 6 while changing the posture of the half mirror 6 from the second posture shown in FIG. 6B to the first posture shown in FIG. 6C, thereby to control the amount of extension and contraction of the advancing/retreating rod 32a so that an output of the focus detection signal may be the maximum.

The CPU 10 sets an angle of the light flux separation part 6 in relation to the optical axis based on at least one of the image information output from the CCD 7 and the focus information output from the focus detecting part 19 in the first position.

With such a configuration, the focus detection signal of the focus detecting element 19 can be set at the maximum irrespective of change in the environmental temperature.

### (Embodiment 2)

Due to restrictions on arrangement of each part when the movable lens-barrel 2 is stored in the imaging apparatus 1, it may be necessary to arrange the focus detecting element 19 and the CCD 7 in the imaging apparatus 1 so that an optical distance L1 and an optical distance L2 may be different from each other with respect to the light flux separation part 6, as shown in FIG. 13.

When the focus detecting element 19 and the CCD 7 are not conjugate to each other, a focused image is not obtained on the CCD 7 even when the focus lens 5 is driven to the focus target position on the basis of the focus detection information acquired by the focus detecting element 19.

In this embodiment 2, a nonvolatile memory area 11a is provided in the memory part 11 shown in FIG. 2. Then, a chart as a same object is imaged in a manufacturing process, and the CPU 10 acquires, as focus detection information, the focus target position by using the focus detecting element 19. Moreover, this same chart is imaged using the CCD 7, and the CPU 10 acquires, as the focus detection information, the focus target position on the basis of the contrast method by using the CCD 7. Then, the CPU 10 stores a difference between the focus detection information acquired by the focus detecting element 19 and the focus detection information acquired by the CCD 7 in advance in the nonvolatile memory area 11a as correction information.

With such a configuration, even when the focus detecting element 19 and the CCD 7 need to be disposed in a non-conjugate relation with respect to the light flux separation part 6 for arrangement restrictions of each part of the imaging apparatus 1, the focus lens 5 can be driven on the basis of the focus detection information obtained by the focus detecting element 19 so that a clear focused image may be obtained on the CCD 7.

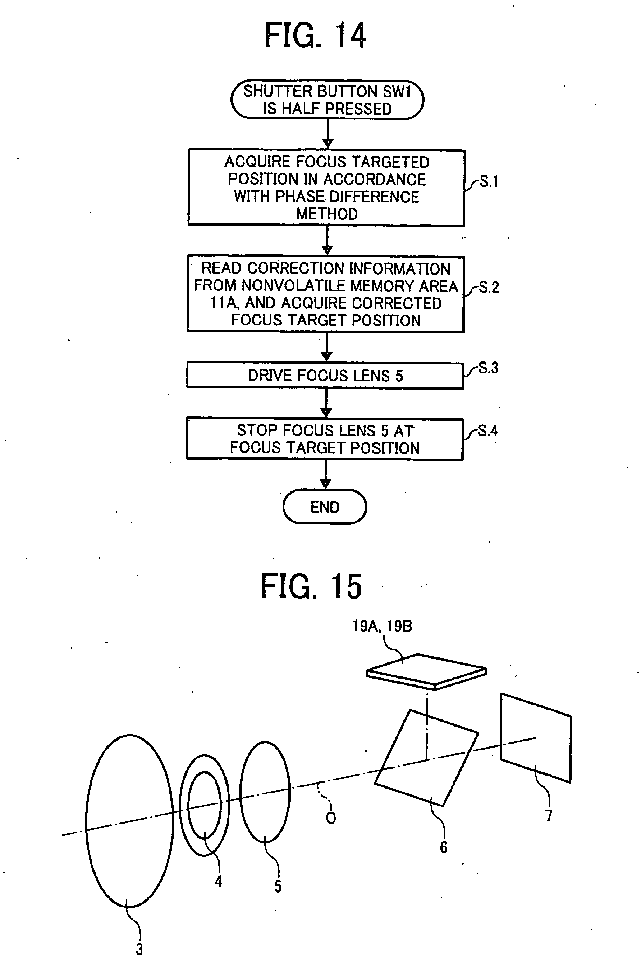

Namely, in this embodiment 2, when the shutter button SW1 is half pressed, the CPU 10 acquires the focus target position on the basis of the focus detection signal from the focus detecting element 19 in accordance with the phase difference method (see Step S.1 of FIG. 14). Then, the CPU 10 reads the correction information from the nonvolatile memory area 11a, corrects the focus target position obtained in accordance with the phase difference method, and acquires a corrected focus target value (see Step S.2 of FIG. 14). Then, the CPU10 controls the driving mechanism 17c to set the focus lens 5 at the corrected focus target position (see Step S.3 of FIG. 14). Subsequently, the CPU 10 stops drive of the focus lens 5 at the focus target position (see Step S.4 of FIG. 14). Thereby, a focused image focused on the CCD 7 is acquired.

### (Embodiment 3)

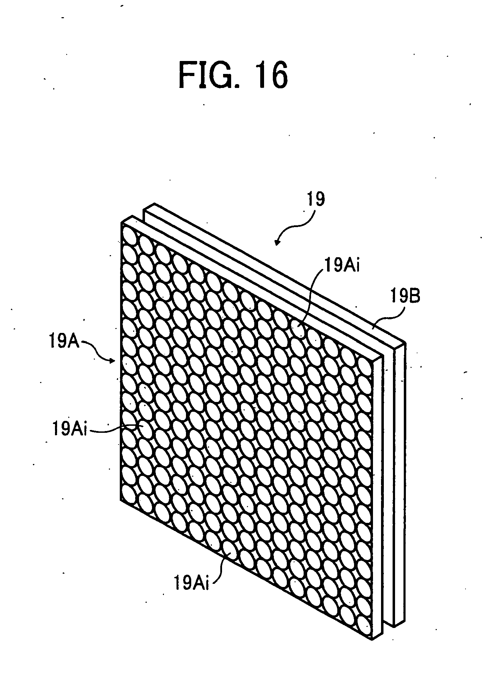

In this embodiment 3, as shown in FIG. 15 and FIG. 16, a focus detecting element 19 is configured of a microlens array plate 19A and a focus detection imaging element 19B. A CCD is used for the focus detection imaging element 19B, for example.

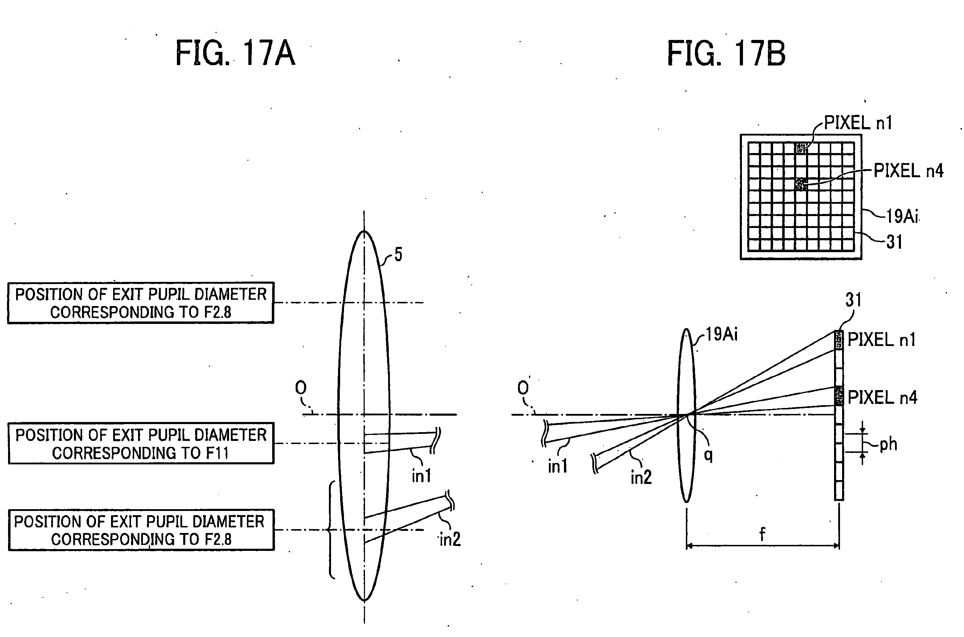

The microlens array plate 19A has microlenses 19Ai. Each of the microlens 19Ai is provided to a corresponding pixel region 31 formed of pixels of 9 x 9, as shown in FIGs. 17A and 17B.

In each aperture value, an angle of each of the incident light flux that enters a corresponding pixel of the pixel region 31 through one of the different positions in an exit pupil diameter of the focus lens 5 is defined by a light flux that passes through a principal point q of each microlens 19Ai. Each of the pixel region 31 is disposed in a position away from the corresponding microlens 19Ai by a focal length f. The number of pixels corresponding to one microlens 19Ai is 9. Therefore, when a pixel pitch ph is 2 µm, a length of a pixel row corresponding to one microlens 19Ai is 18 µm. When an open F number of the focus lens 5 is 2.8, the focal length f of one microlens 19Ai is 50.4 µm, which is obtained from a formula of f/18=2.8. Since the pixel region 31 is a square, each microlens 19Ai has a square shape with a periphery of thereof being cut out when observed from the front, as shown in FIG. 17B.

FIG. 17A schematically shows a relationship between the focus lens 5, the microlens 19Ai, and each of incident light in. The in 1 shows incident light corresponding to an exit pupil diameter in an aperture value F11, and in2 shows incident light corresponding to an exit pupil diameter in an aperture value F2.8. A state is shown where a pixel n1 receives the incident light in2 and a pixel n4 receives the incident light in1. In this example, an exit pupil of the focus lens 5 is divided into 81 pieces by the microlenses 19Ai.

FIG. 17A shows a case where one of the microlenses 19Ai and the corresponding one of the pixel regions 31 exist on the imaging optical axis O of the focus lens 5. Relationships between the other microlenses 19Ai and the pixel regions 31 corresponding thereto, which are not on the imaging, optical axis O, are similar.

Accordingly, the pixel that receives the incident light of the exit pupil diameter entering the focus lens 5, which corresponds to one of the aperture values are determined for all the microlenses 19Ai and the pixel regions 31 corresponding thereto. Thus, each of the incident light flux that enters the corresponding position in exit pupil diameter of the focus lens 5 and passes through the principal point q of the corresponding microlens 19Ai is associated with each of the pixels within the pixel region 31 corresponding to this microlens 19Ai.

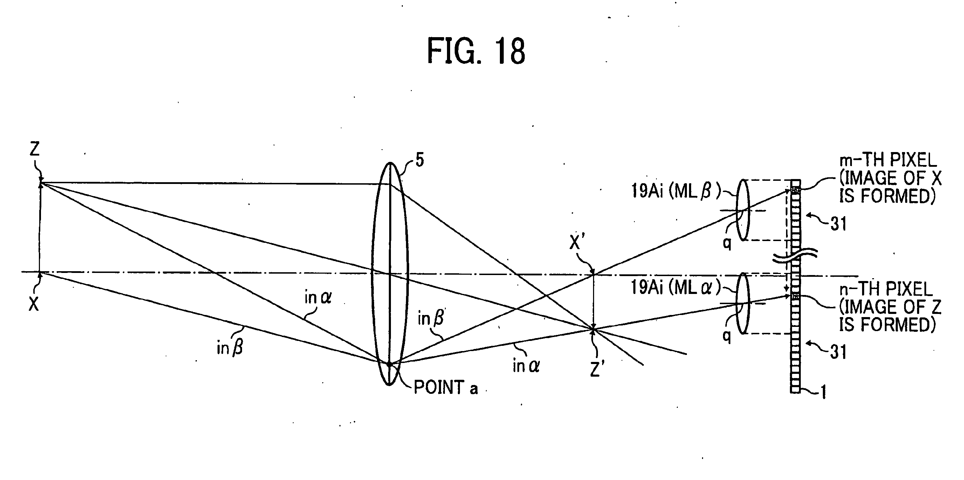

For example, description is given on the incident light fluxes that enter a point a at a position in an exit pupil diameter in F2.8 through the focus lens 5 and the pixel regions respectively corresponding to MLα and MLβ among the microlenses 19Ai, as shown in FIG. 18. The n-th pixel of the pixel region 31 corresponding to the microlens MLα receives the incident light flux ina, and the m·th pixel of the pixel region 31 corresponding to the microlens MLβ receives the incident light flux inβ.

The microlens 19Ai that exists between the microlenses MLα and MLα also has a pixel that receives the incident light flux that passes through this point a and the principal point q of the microlens 19Ai. Accordingly, when the pixel data on the basis of these pixels is appropriately selected and arranged, an image of an object that passes through the point a of the position in the exit pupil diameter of the focus lens 5 in F2.8 can be generated.

Such a process is referred to as reconstruction of an image, in which an image of an object corresponding to each of positions in exit pupil diameter of the focus lens 5 is generated by using the pixel data of the corresponding pixel that receives the incident light flux, which is emitted from a corresponding position in the exit pupil diameter of the focus lens 5, and enters the corresponding microlens 19Ai, and also passes through the principal point q of the corresponding microlens 19Ai.

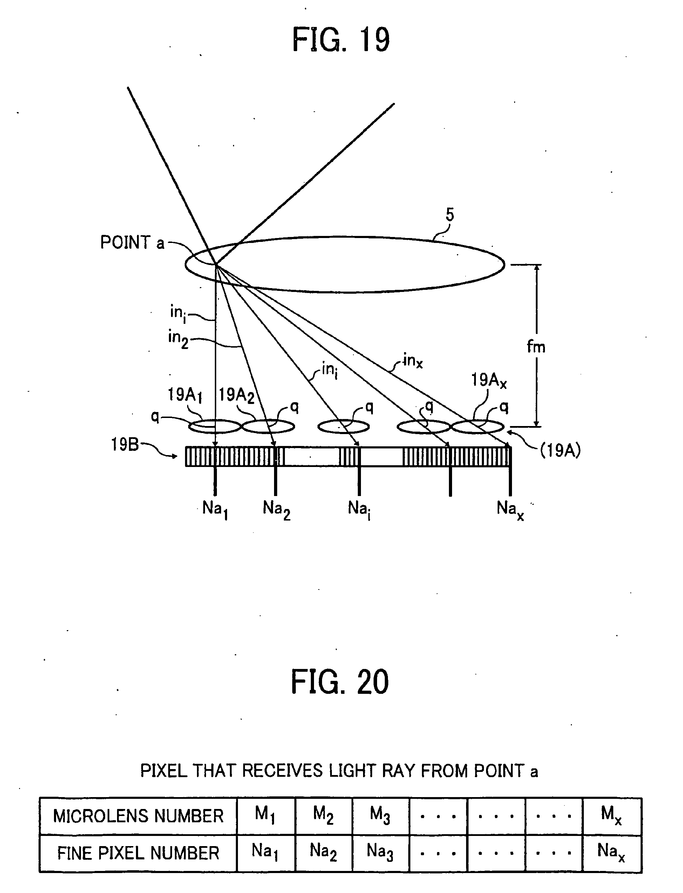

Namely, as shown in FIG. 19, the microlenses 19A1, 19A2,..., 19Ai,..., 19Ax are densely disposed at a position away from the focus lens 5 by a distance fm (microlens array plate 19A), and the focus detection imaging element 19B formed of a plurality of pixels is disposed immediately behind these microlenses 19Ai. For convenience of description, assume that a dimension of each of these pixels is as small as possible.

When the microlens array plate 19A is not arranged, each pixel receives the incident light flux emitted from the whole surface of the exit pupil through the focus lens 5. When the microlens array plate 19A is arranged, a pixel into which an incident light flux emitted from the point a of the position in the exit pupil diameter enters is defined by the microlenses 19Ai for each pixel. FIG. 19 shows a state where the pixel Na1 receives the incident light flux inl that passes through the principal point q of the microlens 19A1, the pixel Na2 receives the light flux in2 that passes through the principal point q of the microlens 19A2, the pixel Nai receives the light flux ini that passes through the principal point q of the microlens 19Ai, and the pixel Nax receives the incident light flux inx that passes through the principal point q of the microlens 19Ax.

Accordingly, when the distance fm between the focus lens 5 and the microlens array plate 19A is determined, a relationship between an incident light flux that passes through the principal point q of each microlens 19Ai and a pixel that receives this incident light flux is determined for each position in exit pupil diameter. FIG. 20 is a correspondence table showing a relationship between each of the incident light flux shown in the FIG. 19 and a corresponding image receiving element that receives this incident light flux.

Accordingly, when the pixel data of the pixel Na1 to the pixel Nax is selected and extracted from all the pixels of the focus detection imaging element 19B, arrangement information on an image of an object observed from the point a of the focus lens 5, i.e., an object image can be obtained.

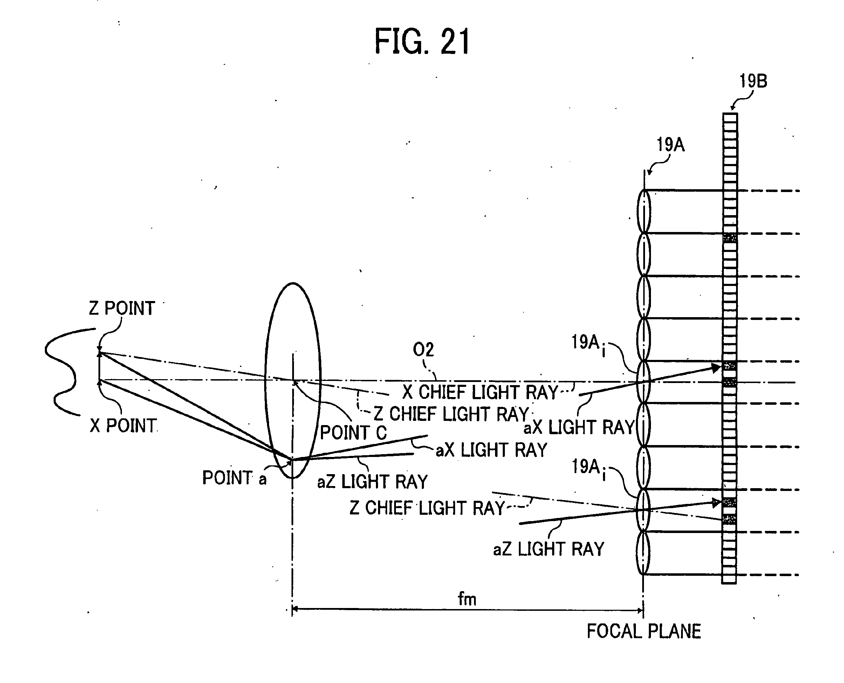

As shown in FIG. 21, assume that: among rays of light emitted from an object point X of a object, ax is incident light that passes through the point a of the focus lens 5; among rays of light emitted from an object point z of the object, az is incident light that passes through the point a of the focus lens 5; a X chief light ray is a light ray that is emitted from the object point X and passes through a principal point C of the focus lens 5; Z chief light ray is a light ray that is emitted from the object point Z and passes through the principal point C of the focus lens 5; and the object is focused on the microlens array plate 19A. Here, the X chief light ray and the Z chief light ray enter different microlenses 19Ai on the microlens array plate 19A. In the state where the focus lens 5 is focused on the object, the ax light ray and the az light ray also enter the microlenses 19Ai that the X chief light ray and the Z chief light ray enter, respectively.

When the distance fm from the focus lens 5 to the microlens array plate 19A is determined, the pixel that each of the incident light flux entering through a corresponding position in the exit pupil diameter of the focus lens 5 enters when the focus lens 5 is focused on the object is determined. Accordingly, the relationship between each pixel and each distance fm can be recognized by a system circuit in advance. When the focus lens 5 is not focused on the object, the ax light ray and the az light ray do not enter the respective microlenses 19Ai, which the X chief light ray and the Z chief light ray enter.

Then, on the basis of the focus detection signal outputted from each pixel of the focus detecting element 19, the CPU 10 can acquire focus detection information with a known phase difference method, which will be described later.

FIGs. 22A to 22F each shows a principle of focus detection in accordance with the known phase difference method. In FIGs. 22A to 22F, a reference numeral 32 denotes a main lens corresponding to the focus lens 5, a reference numeral 33 an image formation surface corresponding to an imaging surface of the CCD 7, a reference numeral 34 the condensing lens, reference numerals 35 and 35 a pair of separator lenses, and reference numeral 36 a pair of line sensors.

The pair of separator lenses 35 and 35 corresponds to different positions in the exit pupil diameter of the main lens 32, respectively, through the condensing lens 34. As shown in FIG. 22A, when the main lens 32 is focused on an object Ob, an image of the object Ob is formed on the image formation surface 33, and as shown in FIG. 22D, a predetermined image interval L0 is obtained with the pair of separator lenses 36 and 35.

Moreover, as shown in FIG. 22B, when the main lens 32 is not focused on the object Ob and the image of the object Ob is formed in front of the image formation surface 33, an image interval L1 narrower than the predetermined image interval L0 is obtained with the pair of separator lenses 35 and 35 as shown in FIG. 22E.

Moreover, as shown in FIG. 22C, when the main lens 32 is not focused on the object Ob and the image of the object Ob is formed behind the image formation surface 33, an image interval L2 wider than the predetermined image interval L0 is obtained with the pair of separator lenses 35 and 35 as shown in FIG. 22F.

In focus detection processing in accordance with the known phase difference method, the CPU 10 calculates a length of the image interval L1 or that of the image interval L2 in the pair of line sensors 36 and 36 on the basis of the focus detection signal outputted from the pair of line sensors 36 and 36. Then, a drive direction and driving amount of the main lens 32 are determined by comparing the length of the image interval L1 or L2 with that of the image interval L0.

In the imaging apparatus according to this embodiment 3, when the focus lens 5 is focused on the object, the pixels that receive the light rays entering through the microlenses 19Ai are determined, respectively. Accordingly, the CPU 10 can reconstruct the same image as the image in the pair of line sensors 36 and 36 obtained when the lens is focused on the object Ob as shown in FIG. 22A, and determine this image interval by calculation. Thereby, the image interval L0 when the focus lens 5 is focused on the object can be obtained. Then, focus deviation of the focus lens 5 with respect to the object can be detected by comparing the length of this image interval L0 with that of the image interval actually obtained.

Thus, when the focus detecting element 19 is formed of the microlens array 19Ai and the focus detection imaging element 19B, optical elements such as the condensing lens 34 and the pair of separator lenses 35 and 35 essential to focus detection in accordance with the conventional phase difference method and an arrangement space for these optical elements can be omitted. Thereby, the imaging apparatus 1 can have a smaller size and thinner thickness and can have a simpler mechanism.

As described above, in the third embodiment, the focus detecting part 19 includes a focus detection imaging element 19B for focus detection having a plurality of pixels each receiving image forming light flux and outputting pixel data and a microlens array 19A having a plurality of microlenses 19Ai covering a predetermined range of the plurality of pixels. The focus information of the object is output based on outputs of the focus detection imaging element 19B.

### (Embodiment 4)

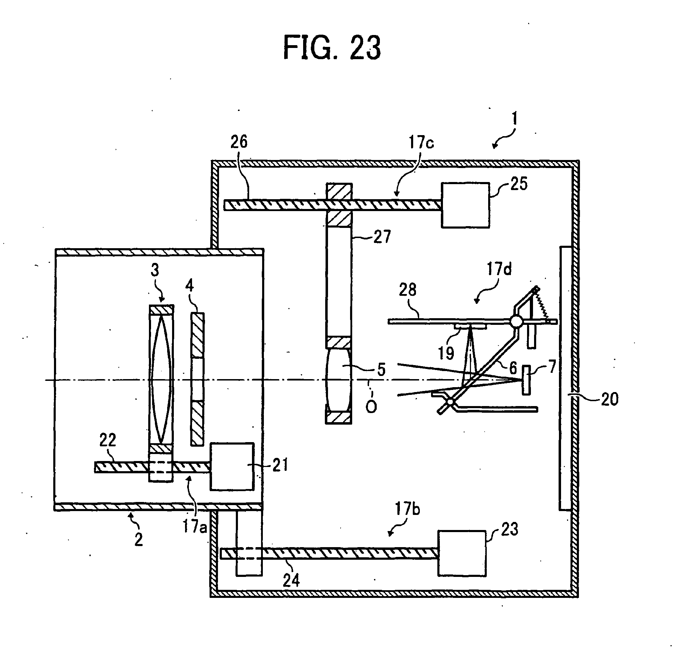

In this embodiment 4, the light flux separation part 6 is formed of a half mirror. As shown in FIG. 23, the image-forming light flux obtained through the imaging optical system is reflected by the half mirror and guided to the focus detecting element 19, and simultaneously transmits through the half mirror and is guided to the CCD 7.

According to this embodiment, on the basis of the image-forming light flux, an object image is simultaneously formed in both the focus detecting element 19 and the CCD 7. Accordingly, a through-the-lens image can be displayed on the LCD 20 of the imaging apparatus 1 during the focus detection. Thereby, the focus detection can be performed while observing the object.

Moreover, according to this embodiment, both focus detection by the focus detecting element 19 and focus detection by the CCD 7 can also be performed, or either can be selected and performed.

Hereinafter, description will be given on a case where the focus detection using the focus detecting element 19 is performed in accordance with the phase difference method, and subsequently, the focus detection using the CCD 7 is performed in accordance with the contrast method.

That is, the focus state changing part 17c may include an image focus detecting part configured to output image focus information of the object based on the image information output from the CCD 7. The focus state changing part 17c is configured to change the focus state of the object based on the focus information output from the focus detecting part 19 and the image focus information output from the image focus detecting part.

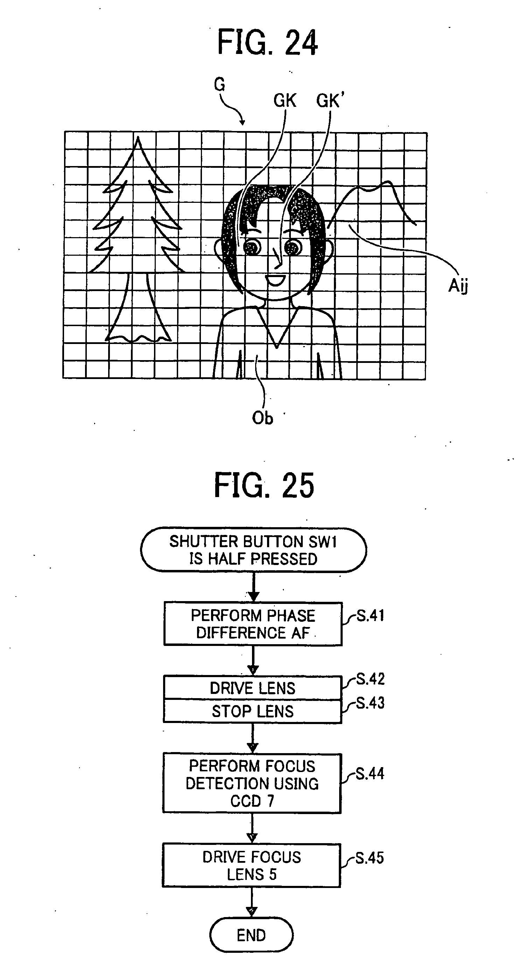

For example, as shown in FIG. 24, an object image obtained by the CCD 7 is divided into areas Aij of 14 x 16. Moreover, a contrast value storing part area is prepared in the memory part 11 shown in FIG. 2. In this contrast value storing part area, a contrast value obtained for each area Aij is stored for each lens position of the focus lens 5.

When the shutter button SW1 is half pressed, the CPU 10 executes the phase difference AF processing on the basis of the focus detection signal obtained by the focus detecting element 19 (Step S.41 of FIG. 25). Thereby, it is detected whether the focus lens 5 is focused on the front side of the object (the so-called front focus) or whether the focus lens 5 is focused on the rear side of the object (the so-called rear focus), and the amount of focus deviation is obtained. Subsequently, the CPU 10 drives the focus lens 5 to the focus target position on the basis of the amount of focus deviation, and stops the focus lens 5 at the focus target position (see Steps S.42 and S.43 of FIG. 25).

Next, in this focus target position, the CPU 10 performs focus detection using the CCD 7 in accordance with the contrast method (see Step S.44 of FIG. 25). Then, on the basis of a contrast value obtained by the CCD 7, the CPU 10 drives the focus lens 5 to the lens position having the largest contrast value, and stops the focus lens 5 at the lens position (see Step S.45 of FIG. 25).

### (Embodiment 5)

In this embodiment 5, focus detection by the focus detecting element 19 and a face recognition processing to recognize a face of a person as an object on the basis of image information obtained by the CCD 7 are combined.

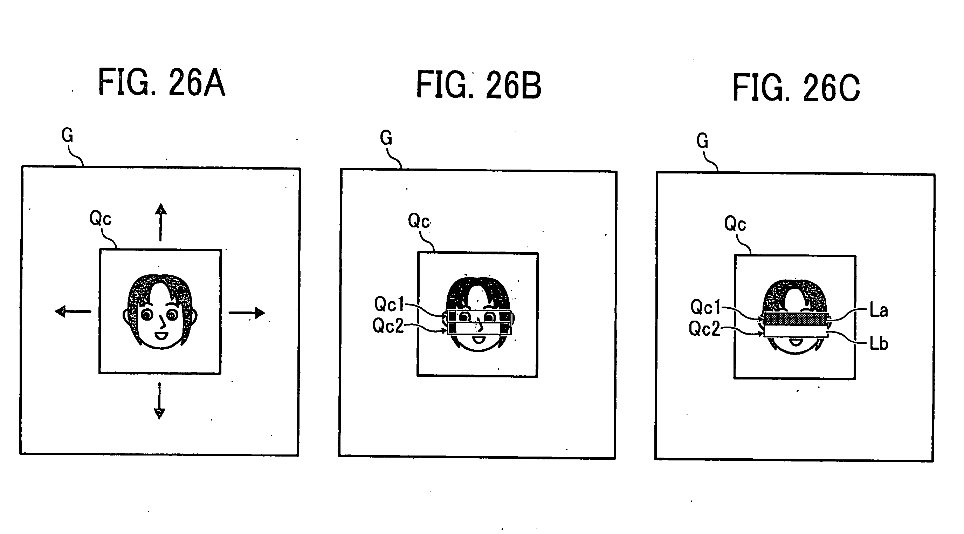

Hereinafter, an example of an extraction method for extracting a face of a person will be described. For example, as shown in FIGs. 26A to 26C, a face determination rectangle Qc is set within a display screen G, and this face determination rectangle Qc is set moveable within the display screen G.

A first feature region Qc1 having a rectangular shape and a second feature region Qc2 having a rectangular shape are set within the face determination rectangle Qc. The first feature region Qc1 and the second feature region Qc2 are respectively set at predetermined positions in the face determination rectangle Qc. When a feature quantity of the face is detected, the feature quantities are respectively calculated from the first feature region Qc1 and the second feature region Qc2 by defining an inside of the face determination rectangle Qc as an observation region.

For example, the first feature region Qc1 corresponds to a portion of eyes of the person, and the second feature region Qc2 corresponds to a portion of a nose of the person. Here, the feature quantity is, for example, an average value of the pixel data obtained on the basis of the pixels that exist within each of the first feature region Qc1 and the second feature region Qc2.

The face determination rectangle Qc is moved within the display screen G, and the feature quantity La of the first feature region Qc1 and the feature quantity Lb of the second feature region Qc2 are calculated in the moved position. Then, a difference Δc between the feature quantity La of the first feature region Qc1 and the feature quantity Lb of the second feature region Qc2 is calculated. It can be determined whether a face exists in the observation region on the basis of whether this difference Δc is larger than a predetermined threshold a. The threshold a is obtained by learning using a sample picture. Practically, face determination rectangles Qc of several sizes are prepared. Moreover, the number of the feature regions of the face determination rectangle Qc is not limited to 2 as mentioned above. Further, a positional relation of the feature regions can also be determined where relevant. Since this face determination rectangle processing is known, detailed description more than this will be omitted.

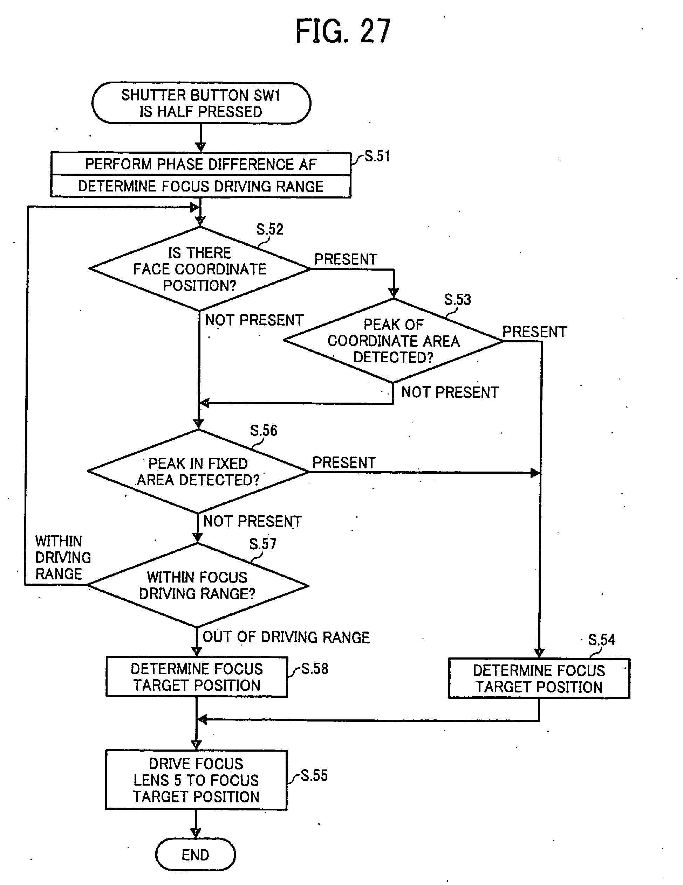

First, when the shutter button SW1 is half pressed, as shown in FIG. 23, the CPU 10 executes automatic focus detection in accordance with the phase difference method on the basis of the focus detection signal from the focus detecting element 19 with the half mirror being inserted in the optical path of the imaging optical system, and determines a driving range of the focus lens 5 (see Step S.51 of FIG. 27). The driving range of the focus lens 5 is set within a range slightly larger than an amount of focus deviation in a direction to eliminate the amount of focus deviation in the phase difference method obtained by the focus detecting element 19. Next, drive of the focus lens 5 is started in accordance with control of the CPU 10.

Simultaneously with drive of the focus lens 5, the CPU 10 periodically executes the face detection processing on the basis of a video signal from the CCD 7 (see Step S.52 of FIG. 27). The CPU 10 stores a face position coordinate on the screen in a face coordinate memory area of the memory part 11 when a face is detected.

When the face position coordinate is already stored in the face coordinate memory area, at the time when starting drive of the focus lens 5, the CPU 10 constantly checks whether the contrast value of the divided area (for example, area Gk' of FIG. 24) of which the face position coordinate is stored changes or not (see Step S.53 of FIG. 27).

When a peak is detected due to change of the contrast value within the divided area Gk' during the drive of the focus lens 5, the CPU 10 determines a position of the focus lens 5, from which the peak is obtained, as a focus target position of the focus lens 5 (see Step S.54 of FIG. 27). Subsequently, the CPU 10 drives the focus lens 5 to the focus target position (see Step S.55 of FIG. 27).

When peak is not detected due to change of the contrast value within the divided area Gk' during the drive of the focus lens 5, the CPU 10 constantly checks whether the contrast value within a fixed area Gk (mentioned later) changes or not during the drive of the focus lens 5 (see Step S.56 of FIG. 27).

When the peak is detected due to change of the contrast value within the fixed area Gk during the drive of the focus lens 5, the CPU 10 determines a position of the focus lens 5, from which the peak is obtained, as the focus target position of the focus lens 5 (see Step S.54 of FIG. 27). Subsequently, the CPU 10 drives the focus lens 5 to the focus target position (see Step S.55 of FIG. 27). The fixed area Gk denotes a center of the screen G here. This fixed area Gk can be specified by a user.

When no peak is detected due to change of the contrast value within the fixed area Gk during the drive of the focus lens 5, the CPU 10 checks whether the focus lens 5 has exceeded the driving range thereof (see Step S.57 of FIG. 27). When the focus lens 5 is within the driving range thereof, the CPU 10 returns to Step S.52 of FIG. 27, executes the face detection processing again, and repeats Step S.52 to S.57.

When neither the peak of the contrast value of the divided area Gk' nor that of the fixed area Gk is detected during the drive of the focus lens 5, namely, when the focus lens 5 has exceeded the driving range thereof, the CPU 10 determines the focus target position of the focus lens 5 as a fixed focus position (see Step S.58 of FIG. 27). Subsequently, the CPU 10 drives the focus lens 5 to the focus target position (see Step S.55 of FIG. 27).

Here, the fixed focus position is set, for example, at 2.5 m, at which imaging is most frequently performed.

The imaging apparatus usually has a still picture shooting mode for example, a singly-imaging still image mode where singly-imaging of a still image is performed and a still picture continuous shooting mode, for example, a continuously-imaging still image mode where a continuously-imaging of still images is performed. Accordingly, the imaging apparatus can have a configuration as follows. In the still picture shooting mode, the CPU 10 executes focus detection using the focus detecting element 19 in accordance with the phase difference method with the light flux separation part 6 being inserted in the imaging optical path. When imaging, the light flux separation part 6 is flipped up to be retreated from the optical path of the imaging optical system, and executes imaging. In the continuous shooting mode, imaging is performed using the CCD 7 while the CPU 10 executes automatic focus detection using the focus detecting element 19 in accordance with the phase difference method with the light flux separation part 6 inserted in the optical path of the imaging optical system. In this case, the imaging apparatus can image while following a moving object.

That is, the CPU controls the light flux separation part 6 such that the light flux separation part 6 is disposed in the second position in a case of imaging in the singly-imaging still image mode and is disposed in the first position in a case of imaging in the continuously-imaging still image mode.

According to the present invention, high-speed auto-focusing in imaging can be achieved. Moreover, the imaging apparatus with an even smaller size and thinner thickness can be achieved.

According to the present invention, the light flux separation part can be disposed on the imaging optical path in an optimal state.

According to the present invention, even when the imaging element and the focus detecting element for imaging an object have no conjugation relation, the focusing information obtained by the focus detecting element can be corrected to accurately drive the focus lens to the focus target position.

According to the present invention, since the AF optical system needed for the AF unit of the conventional phase difference method can be eliminated, the focus detecting element with a thinner thickness can be achieved. Accordingly, the imaging apparatus with an even smaller size and thinner thickness can be achieved.

According to the present invention, since it is configured so that the focus lens may be retreated from the imaging optical path, the imaging apparatus with an even smaller size and thinner thickness can be achieved.

According to the present invention, the through-the-lens image of the object image can be displayed on the LCD of the imaging apparatus during the focus detection. Thereby, the focus detection can be performed while observing the object.

Moreover, both focus detection by the focus detecting element and focus detection by the imaging element can be performed.

Moreover, even when the imaging surface of the focus detecting element and the imaging surface of the imaging element are not conjugate to each other with respect to the light flux separation part, the focus lens can be accurately located in the focus target position as follows while achieving high-speed auto-focusing. The focus lens is driven to the focus target position on the basis of the focusing information obtained by the focus detecting element. During or after the drive of the focus lens, the focus lens is driven to the focus target position obtained on the basis of the contrast value of the pixel data of the imaging element in the hill-climbing method AF.

Furthermore, when the focus detecting element can detect focus positions of several places within an imaging range, a face of a person is recognized on the basis of the pixel data of the imaging element, and the coordinate of a position of the face is acquired. Then, the focus target position of a position corresponding to the position coordinate is detected by using the focus detecting element. Thereby, an aimed object can be focused at a high speed.

According to the present invention, the light flux separation part and the focus detecting element can be compactly arranged in the base part.

According to the present invention, since the stray light prevention part is provided in the light flux separation part, the stray light due to reflection of the light flux separation part when imaging an object can be prevented from entering the imaging element.

Moreover, according to the present invention, the stray light prevention part can be compactly arranged in the light flux separation part.

According to the present invention, at the time of exposure in the still picture single shooting mode, the light flux separation part is set in the second state in which the light flux separation part is retreated from the imaging optical path, and at the time of exposure in the still picture continuous shooting mode, the light flux separation part is set in the first state where the light flux separation part enters the imaging optical path. For this reason, focus detection by the focus detecting element can be performed while imaging continuous still pictures. Namely, while imaging the continuous still pictures, whether a focus is on a front side or on a rear side with respect to a proper focus position can be detected by using the focus detecting element in accordance with the phase difference method, and the focus lens can be quickly set at the focus target position.

According to the present invention, high-speed auto-focusing in imaging can be achieved. Moreover, the imaging apparatus with an even smaller size and thinner thickness in the state where the movable lens-barrel is stored in the imaging apparatus can be achieved.

According to the present invention, since the AF optical system needed for the AF unit of the conventional phase difference method can be eliminated, the focus detecting element with a thinner thickness can be attained. Accordingly, the imaging apparatus with an even smaller size and thinner thickness can be achieved.

According to the present invention, since the focus lens is configured to be retreated from the imaging optical path, the imaging apparatus with an even smaller size and thinner thickness can be achieved.

According to the present invention, the half mirror can be disposed on the imaging optical path in an optimal state.

According to the present invention, even when the imaging element for imaging an object and the focus detecting element have no conjugation relation, the focusing information obtained by the focus detecting element can be corrected to accurately drive the focus lens to the focus target position.

Although the present invention has been described in terms of exemplary embodiments, it is not limited thereto. It should be appreciated that variations may be made in the embodiments described by persons skilled in the art without departing from the scope of the present invention as defined by the following claims.

## Claims

1. An imaging apparatus (1), comprising:
an imaging optical system configured to form an image-forming light flux of an object;
an imaging element (7) configured to receive the image-forming light flux and to output image information;
a movable lens-barrel (2) configured to hold the imaging optical system and to be reciprocatable between a stored position where the movable lens barrel (2) is stored in the imaging apparatus (1) and an extended position where the movable-lens barrel (2) is extended from the imaging apparatus (1);
a focus detecting part (19) configured to receive the image forming light flux and to output focus information of the object;
a light flux separation part (6) configured to separate the image-forming light flux and guide the separated image-forming light fluxes to the imaging element (7) and the focus detecting part (19);
a movable holding part (28) configured to movably hold the light flux separation part (6) and the focus detecting part (19) among a first position where the light flux separation part (6) is disposed on an optical axis of the imaging optical system between the movable lens-barrel (2) and the imaging element (7) to separate the image-forming light flux and the separated image-forming light flux is received by the focus detecting part (19), a second position where the light flux separation part (6) is retracted from the optical axis and the image-forming light flux is guided to the imaging element (7) and a third position where the light flux separation part (6) and the focus detecting part (19) are retracted from a space which is occupied by the movable lens barrel when being in the stored position; and
a switching part (10, 17) configured to switch among a first state in which the movable lens barrel (2) is in the extended position and the light flux separation part (6) and the focus detecting part (19) are in the first position, a second state in which the movable lens barrel (2) is in the extended position and the light flux separation part (6) and the focus detecting part (19) are in the second position, and a third state in which the movable lens barrel (2) is in the stored position and the light flux separation part (6) and the focus detecting part (19) are retracted from the space, which is occupied by the movable lens barrel in the stored position.

2. The imaging apparatus (1) according to claim 1, wherein the light flux separation part (6) is a half mirror.

3. The imaging apparatus (1) according to claim 1, further comprising a controller (10) configured to control positions of the movable lens-barrel (2) and the movable holding part; and
a focus state changing part (17c) configured to change a focus state of the object in the image information by moving a part (6) of optical elements of the imaging optical system based on the focus information output from the focus detecting part (19), wherein imaging is performed in the second state.

4. The imaging apparatus (1) according to any one of claims 1 to 3, wherein the imaging element (7) is disposed perpendicular to the optical axis of the imaging optical system:
in the first position, the light flux separation part (6) is obliquely disposed in relation to the optical axis and the focus detecting part (19) is disposed substantially parallel to the optical axis;
in the second position, the light flux separation part (6) and the focus detecting part (19) are disposed substantially parallel to the optical axis; and
in the third position, the focus detecting part (19) and the light flux separation part (6) are disposed substantially perpendicular to the optical axis.

5. The imaging apparatus (1) according to claim 3 or 4, wherein the controller (10) sets an angle of the light flux separation part (6) in relation to the optical axis based on at least one of the image information output from the imaging element (7) and the focus information output from the focus detecting part (19) in the first position.

6. The imaging apparatus (1) according to any one of claims 3 to 5, further comprising:
an image focus detecting part configured to output image focus information of the object based on the image information output from the imaging element (7), wherein
the focus state changing part (17c) is configured to change the focus state of the object based on the focus information output from the focus detecting part (19) and the image focus information output from the image focus detecting part.

7. The imaging apparatus (1) according to any one of claims 1 to 6, wherein the focus detecting part (19) includes
a focus detection imaging element (19B) for focus detection having a plurality of pixels each receiving image forming light flux and outputting pixel data and
a microlens array (19A) having a plurality of microlenses (19Ai) covering a predetermined range of the plurality of pixels; and
the focus information of the object is output based on outputs of the focus detection imaging element (19B).

8. The imaging apparatus (1) according to any one of claims 2 to 7, wherein the optical element moved by the focus state changing part (17c) is a focus lens (5);
the controller (10) controls the focus lens (5) such that the focus lens (5) is retracted from the optical axis when the movable lens barrel (2) is in the stored position and moved onto the optical axis when the movable lens barrel (2) is in the extended position; and
the controller (10) controls the focus lens (5) and the light flux separation part (6) such that the focus lens (5) is extended in an extending direction of the movable lens barrel (2) when the movable lens barrel (2) is in the extended position and the light flux separation part (6) is moved onto the optical axis.

9. The imaging apparatus (1) according to any one of claims 1 to 8, wherein the movable holding part includes a base member (28) rotatably disposed about an axis portion (29) in relation to the imaging apparatus (1);
the focus detecting part (19) is fixed to the base member (28);
the light flux separation part (6) has an image forming light flux separation portion (6A) disposed at a side so as to be moved on the optical axis and a biasing portion (6B) disposed at an opposite side across the axis portion (29) so as to bias the light flux separation part (6) in directions toward and away from the focus detecting part (19), the light flux separation part (6) being rotatably disposed about the axis portion (29);
the base member (28) is configured to rotate between the first position and the third position;
a spring (31) is provided between the base member (28) and the biasing portion (6B) configured to bias the light flux separation part (6) in a direction where the light flux separation part (6) is moved from the first position to the second position; and
the light flux separation part (6) has a biasing device (32) configured to bias the biasing portion (6B) in a direction where the light flux separation part (6) is moved to the first position against the biasing of the spring (31).

10. The imaging apparatus (1) according to any one of claims 1 to 9, wherein the light flux separation part (6) has a stray light prevention part (34) configured to prevent stray light due to reflection of the light flux separation part (6) from entering the imaging element (7) when the light flux separation part (6) is in the second position; and
the stray light prevention part (34) is configured to be retracted from the optical axis when the light flux separation part (6) is in the first position.

11. The imaging apparatus (1) according to claim 10, wherein the stray light prevention part (34) is rotatably provided via the axis portion on the image forming light flux separation portion (6A); and
the stray light prevention part (34) includes a spring configured to retract the stray light prevention part (34) from the optical axis when the light flux separation part (6) is in the first position and to bias the stray light prevention part (34) in a direction toward the base member when the light flux separation part (6) is in the second and third positions.

12. The imaging apparatus (1) according to any one of claims 3 to 11, further comprising:
a singly-imaging still image mode where singly-imaging of a still image is performed and a continuously-imaging still image mode where a continuously-imaging of still images is performed; wherein
the controller controls the light flux separation part (6) such that the light flux separation part (6) is disposed in the second position in a case of imaging in the singly-imaging still image mode and is disposed in the first position in a case of imaging in the continuously-imaging still image mode.

## Patentansprüche

1. Abbildungsvorrichtung (1), enthaltend:
ein zum Ausbilden eines bildgebenden Lichtflusses eines Objekts eingerichtetes optisches Abbildungssystem;
ein zum Empfangen des bildgebenden Lichtflusses eingerichtetes Abbildungselement (7) zum Ausgeben von Bildinformationen;
eine bewegliche Linsentrommel (2), die eingerichtet ist, das optische Abbildungssystem zu halten, und zwischen einer gelagerten bzw. eingelagerten Position, in der die bewegliche Linsentrommel (2) in der Abbildungsvorrichtung (1) gelagert bzw. eingelagert ist, und einer ausgefahrenen Position, in der die bewegliche Linsentrommel (2) aus der Abbildungsvorrichtung (1) ausgefahren ist, hin und her bewegt werden kann;s
ein zum Empfangen des bildgebenden Lichtflusses und zum Ausgeben von Fokusinformationen eines Objekts eingerichtetes Fokusdetektierteil (19);
ein Lichtflusstrennteil (6), das eingerichtet ist, den bildgebenden Lichtfluss zu trennen und die getrennten bildgebenden Lichtflüsse zu dem Abbildungselement (7) und dem Fokusdetektierteil (19) zu führen;
ein bewegliches Halteteil (28), das konfiguriert ist, das Lichtflusstrennteil (6) und das Fokusdetektierteil (19) in einer ersten Position, in der das Lichtflusstrennteil (6) auf einer optischen Achse des optischen Abbildungssystems zwischen der beweglichen Linsentrommel (2) und dem Abbildungselement (7) zum Trennen des bildgebenden Lichtflusses angeordnet ist und der getrennte bildgebende Lichtfluss von dem Fokusdetektierteil (19) empfangen wird, einer zweiten Position, in der das Lichtflusstrennteil (6) von der optischen Achse zurückgezogen ist und der bildgebende Lichtfluss zu dem Abbildungselement (7) geführt wird, und/oder einer dritten Position, in der das Lichtflusstrennteil (6) und das Fokusdetektierteil (19) von einem Raum, der von der beweglichen Linsentrommel besetzt wird, wenn sie in der eingelagerten Position ist, besetzt wird, beweglich zu halten; und
ein Schaltteil (10, 17), das konfiguriert ist, zwischen einem ersten Zustand, in dem die bewegliche Linsentrommel (2) sich in einer ausgefahrenen Position befindet und das Lichtflusstrennteil (6) und das Fokusdetektierteil (19) sich in der ersten Position befinden, und einem zweiten Zustand, in dem die bewegliche Linsentrommel (2) sich in der ausgefahrenen Position befindet und das Lichtflusstrennteil (6) und das Fokusdetektierteil (19) sich in der zweiten Position befinden, und einem dritten Zustand, in dem die bewegliche Linsentrommel (2) sich in der eingelagerten Position befindet und das Lichtflusstrennteil (6) und das Fokusdetektierteil (19) von dem Raum, der von der beweglichen Linsentrommel in der eingelagerten Position besetzt wird, zurückgezogen sind.

2. Abbildungsvorrichtung (1) gemäß Anspruch 1, bei der das Lichtflusstrennteil (6) ein Halbspiegel bzw. halbdurchlässiger Spiegel ist.

3. Abbildungsvorrichtung (1) gemäß Anspruch 1, die ferner eine Steuereinrichtung (10) enthält, die eingerichtet ist, Positionen der beweglichen Linsentrommel (2) und des beweglichen Halteteils zu steuern; und
ein Fokuszustandänderungsteil (17c) enthält, das konfiguriert ist, einen Fokuszustand
des Objekts in der Bildinformation zu ändern, indem ein Teil (5) von optischen Elementen des optischen Abbildungssystems basierend auf der von dem Fokusdetektierteil (19) ausgegebenen Fokusinformation geändert wird, wobei das Abbilden in dem zweiten Zustand durchgeführt wird.

4. Abbildungsvorrichtung (1) gemäß irgendeinem der Ansprüche 1 bis 3, bei der das Abbildungselement (7) senkrecht zur optischen Achse des optischen Abbildungssystems angeordnet ist;
in der ersten Position das Lichtflusstrennteil (6) schräg in Bezug auf die optische Achse angeordnet ist und das Fokusdetektierteil (19) im Wesentlichen parallel zur optischen Achse angeordnet ist;
in der zweiten Position das Lichtflusstrennteil (6) und das Fokusdetektierteil (19) im Wesentlichen parallel zur optischen Achse angeordnet sind; und
in der dritten Position das Fokusdetektierteil (19) und das Lichtflusstrennteil (6) im Wesentlichen senkrecht zur optischen Achse angeordnet sind.

5. Abbildungsvorrichtung (1) gemäß Anspruch 3 oder 4, bei der die Steuereinrichtung (10) einen Winkel des Lichtflusstrennteils (6) in Bezug auf die optische Achse basierend auf wenigstens einem aus der von dem Abbildungselement (7) ausgegebenen Bildinformation und der von dem Fokusdetektierteil (19) ausgegebenen Fokusinformation in der ersten Position einstellt.

6. Abbildungsvorrichtung (1) gemäß irgendeinem der Ansprüche 3 bis 5, ferner enthaltend:
ein Bildfokusdetektierteil, das eingerichtet ist, Bildfokusinformationen des Objekts basierend auf der von dem Abbildungselement (7) ausgegebenen Bildinformation auszugeben, wobei
das Fokuszustandänderungsteil (17c) eingerichtet ist, den Fokuszustand des Objekts basierend auf der von dem Fokusdetektierteil (19) ausgegebenen Fokusinformation und der von dem Bildfokusdetektierteil ausgegebenen Bildfokusinformation zu ändern.

7. Abbildungsvorrichtung (1) gemäß irgendeinem der Ansprüche 1 bis 6, bei der das Fokusdetektierteil (19)
ein Fokusdetektierabbildungselement (19B) für Fokusdetektion, das eine Mehrzahl Pixel aufweist, die jeweils bildgebenden Lichtfluss empfangen und Pixeldaten ausgeben und
eine Mikrolinsenanordung (19A), die eine Mehrzahl Mikrolinsen (19Ai) aufweist, die einen vorbestimmten Bereich der Mehrzahl Pixel abdecken, enthält; und
die Fokusinformation des Objekts basierend auf Ausgaben des Fokusdetektierabbildungselements (19B) ausgegeben wird.

8. Abbildungsvorrichtung (1) gemäß irgendeinem der Ansprüche 2 bis 7, bei der das von dem Fokuszustandänderungsteil (17c) bewegte optische Element eine Fokuslinse (5) ist;
die Steuereinrichtung (10) die Fokuslinse (5) so steuert, dass die Fokuslinse (5) von der optischen Achse zurückgezogen wird, wenn die bewegliche Linsentrommel (2) sich in der eingelagerten Position befindet, und auf die optische Achse bewegt wird, wenn die bewegliche Linsentrommel (2) sich in der ausgefahrenen Position befindet und das Lichtflusstrennteil (6) auf die optische Achse bewegt wird.

9. Abbildungsvorrichtung (1) gemäß irgendeinem der Ansprüche 1 bis 8, bei der das bewegliche Halteteil ein Grundglied (28) enthält, das um einen Achsabschnitt (29) rotierbar bezüglich der Abbildungsvorrichtung (1) angeordnet ist;
das Fokusdetektierteil (19) an dem Grundglied (28) fest angebracht ist;
das Lichtflusstrennteil (6) einen Trennabschnitt (6A) für den bildgebenden Lichtfluss, der auf einer Seite angeordnet ist, um auf der optischen Achse bewegt zu werden, und einen Vorspannabschnitt (6B) aufweist, der auf einer über den Achsabschnitt (29) gegenüberliegenden Seite angeordnet ist, um das Lichtflusstrennteil (6) in Richtung zu und weg von dem Fokusdetektierteil (19) vorzuspannen, wobei das Lichtflusstrennteil (6) rotierbar um den Achsabschnitt (29) angeordnet ist;
das Grundglied (28) eingerichtet ist, zwischen der ersten Position und der dritten Position zu rotieren;
eine Feder (31) zwischen dem Grundglied (28) und Vorspannabschnitt (6B) vorgesehen und eingerichtet ist, das Lichtflusstrennteil (6) in einer Richtung vorzuspannen, in der die das Lichtflusstrennteil (6) von der ersten Position in die zweite Position bewegt wird; und
das Lichtflusstrennteil (6) eine Vorspanneinrichtung (32) aufweist, die eingerichtet ist, den Vorspannabschnitt (6B) in eine Richtung vorzuspannen, in die das Lichtflusstrennteil (6) in die erste Position entgegen der Vorspannung der Feder (31) bewegt wird.

10. Abbildungsvorrichtung (1) gemäß irgendeinem der Ansprüche 1 bis 9, bei der das Lichtflusstrennteil (6) ein Streulichtverhinderungsteil (34) aufweist, das eingerichtet ist, Streulicht aufgrund von Reflexion des Lichtflusstrennteils (6) davon abzuhalten, in das Abbildungselement (7) einzutreten, wenn das Lichtflusstrennteil sich in der zweiten Position befindet; und
das Streulichtverhinderungsteil (34) eingerichtet ist, von der optischen Achse zurückgezogen zu werden, wenn sich das Lichtflusstrennteil (6) in der ersten Position befindet.

11. Abbildungsvorrichtung (1) gemäß Anspruch 10, bei der das Streulichtverhinderungsteil (34) rotierbar über einen Achsabschnitt auf dem Trennabschnitt (6A) für den bildgebenden Lichtfluss vorgesehen ist; und
das Streulichtverhinderungsteil (34) eine Feder enthält, die eingerichtet ist, das Streulichtverhinderungsteil (34) von der optischen Achse zurückzuziehen, wenn das Lichtflusstrennteil (6) sich in der ersten Position befindet, und das Streulichtverhinderungsteil (34) in eine Richtung zu dem Grundglied hin vorzuspannen, wenn das Lichtflusstrennteil (6) sich in der zweiten und dritten Position befindet.

12. Abbildungsvorrichtung (1) gemäß irgendeinem der Ansprüche 3 bis 11, ferner enthaltend:
einen selbständig bzw. einzeln abbildenden Standbildmodus, in dem das einzelne Abbilden eines Standbilds durchgeführt wird, und einen kontinuierlich abbildenden Standbildmodus, in dem das kontinuierliche Abbilden von Standbildern durchgeführt wird; wobei
die Steuereinrichtung das Lichtflusstrennteil (6) so steuert, dass das Lichtflusstrennteil (6) in der zweiten Position in einem Fall angeordnet ist, in dem in dem einzeln abbildenden Standbildmodus abgebildet wird, und in der ersten Position angeordnet ist in einem Fall angeordnet ist, in dem in dem kontinuierlich abbildenden Standbildmodus abgebildet wird.

## Revendications

1. Appareil d'imagerie (1), qui comprend :
un système optique d'imagerie configuré pour former un flux lumineux de formation d'image d'un objet ;
un élément d'imagerie (7) configuré pour recevoir le flux lumineux de formation d'image et pour transmettre des informations d'image ;
un barillet de lentille mobile (2) configuré pour maintenir le système optique d'imagerie et pour être animé d'un mouvement de va-et-vient entre une position de rangement dans laquelle le barillet de lentille mobile (2) est rangé dans l'appareil d'imagerie (1), et une position étendue dans laquelle le barillet de lentille mobile (2) s'étend depuis l'appareil d'imagerie (1) ;
une partie de détection de mise au point (19) configurée pour recevoir le flux lumineux de formation d'image et pour transmettre les informations de mise au point de l'objet ;
une partie de séparation de flux lumineux (6) configurée pour séparer le flux lumineux de formation d'image et pour guider les flux lumineux de formation d'image séparés vers l'élément d'imagerie (7) et la partie de détection de mise au point (19) ;
une partie de support mobile (28) configurée pour maintenir de manière mobile la partie de séparation des flux lumineux (6) et la partie de détection de mise au point (19) entre une première position dans laquelle la partie de séparation des flux lumineux (6) est disposée sur un axe optique du système optique d'imagerie entre le barillet de lentille mobile (2) et l'élément d'imagerie (7) afin de séparer le flux lumineux de formation d'image et le flux lumineux de formation d'image séparé est reçu par la partie de détection de mise au point (19), une seconde position dans laquelle la partie de séparation de flux lumineux (6) est rétractée de l'axe optique et le flux lumineux de formation d'image est guidé vers l'élément d'imagerie (7), et une troisième position dans laquelle la partie de séparation des flux lumineux (6) et la partie de détection de mise au point (19) sont rétractées d'un espace qui est occupé par le barillet de lentille mobile lorsqu'il se trouve en position de rangement ; et
une partie de commutation (10, 17) configurée pour activer un premier état dans lequel le barillet de lentille mobile (2) se trouve en position étendue et la partie de séparation des flux lumineux (6) et la partie de détection de mise au point (19) se trouvent dans la première position, un second état dans lequel le barillet de lentille mobile (2) se trouve en position étendue et la partie de séparation des flux lumineux (6) et la partie de détection de mise au point (19) se trouvent dans la seconde position, et un troisième état dans lequel le barillet de lentille mobile (2) se trouve en position de rangement et la partie de séparation des flux lumineux (6) et la partie de détection de mise au point (19) sont rétractées de l'espace, qui est occupé par le barillet de lentille mobile en position de rangement.

2. Appareil d'imagerie (1) selon la revendication 1, dans lequel la partie de séparation des flux lumineux (6) est un demi-miroir.

3. Appareil d'imagerie (1) selon la revendication 1, comprenant en outre un contrôleur (10) configuré pour contrôler les positions du barillet de lentille mobile (2) et de la partie de support mobile ; et
une partie de changement de mise au point (17c) configurée pour changer la mise au point de l'objet dans les informations d'image en déplaçant une partie (5) des éléments optiques du système optique d'imagerie sur la base des informations de mise au point qui proviennent de la partie de détection de mise au point (19), dans lequel l'imagerie est effectuée dans le second état.

4. Appareil d'imagerie (1) selon l'une quelconque des revendications 1 à 3, dans lequel l'élément d'imagerie (7) est disposé perpendiculairement à l'axe optique du système optique d'imagerie ;
dans la première position, la partie de séparation des flux lumineux (6) est disposée de manière oblique par rapport à l'axe optique, et la partie de détection de mise au point (19) est disposée de manière sensiblement parallèle à l'axe optique ;
dans la seconde position, la partie de séparation des flux lumineux (6) et la partie de détection de mise au point (19) sont disposées de manière sensiblement parallèle à l'axe optique ; et
dans la troisième position, la partie de détection de mise au point (19) et la partie de séparation des flux lumineux (6) sont disposées de manière sensiblement perpendiculaire à l'axe optique.

5. Appareil d'imagerie (1) selon la revendication 3 ou 4, dans lequel le contrôleur (10) définit un angle de la partie de séparation des flux lumineux (6) par rapport à l'axe optique, sur la base d'au moins l'une des informations d'image transmises par l'élément d'imagerie (7) et des informations de mise au point transmises par la partie de détection de mise au point (19) dans la première position.

6. Appareil d'imagerie (1) selon l'une quelconque des revendications 3 à 5, qui comprend en outre :
une partie de détection de mise au point d'image configurée pour transmettre les informations de mise au point d'image de l'objet sur la base des informations d'image transmises par l'élément d'imagerie (7), dans lequel
la partie de changement de mise au point (17c) est configurée pour changer la mise au point de l'objet sur la base des informations de mise au point transmises par la partie de détection de mise au point (19) et des informations de mise au point d'image transmises par la partie de détection de mise au point d'image.

7. Appareil d'imagerie (1) selon l'une quelconque des revendications 1 à 6, dans lequel la partie de détection de mise au point (19) comprend
un élément d'imagerie à détection de mise au point (19B) destiné à détecter la mise au point et qui possède une pluralité de pixels qui reçoivent chacun un flux lumineux de formation d'image et qui transmettent chacun des données de pixels, et
un ensemble de microlentilles (19A) qui possède une pluralité de microlentilles (19Ai) qui couvrent une plage prédéterminée de la pluralité de pixels ; et
les informations de mise au point de l'objet sont transmises sur la base des résultats de l'élément d'imagerie à détection de mise au point (19B).

8. Appareil d'imagerie (1) selon l'une quelconque des revendications 2 à 7, dans lequel l'élément optique déplacé par la partie de changement de mise au point (17c) est une lentille de mise au point (5) ;
Le contrôleur (10) contrôle la lentille de mise au point (5) afin que la lentille de mise au point (5) soit rétractée de l'axe optique lorsque le barillet de lentille mobile (2) se trouve en position de rangement, et soit déplacée vers l'axe optique lorsque le barillet de lentille mobile (2) se trouve en position étendue ; et
le contrôleur (10) contrôle la lentille de mise au point (5) et la partie de séparation des flux lumineux (6) afin que la lentille de mise au point (5) soit étendue dans une direction d'extension du barillet de lentille mobile (2) lorsque le barillet de lentille mobile (2) se trouve en position étendue et la partie de séparation des flux lumineux (6) est déplacée vers l'axe optique.

9. Appareil d'imagerie (1) selon l'une quelconque des revendications 1 à 8, dans lequel la partie de support mobile comprend un élément de base (28) disposé de manière rotative autour d'une partie d'axe (29) par rapport à l'appareil d'imagerie (1) ;
la partie de détection de mise au point (19) est fixée sur l'élément de base (28) ;
la partie de séparation des flux lumineux (6) possède une partie de séparation des flux lumineux de formation d'image (6A) disposée sur un côté de façon à être déplacée sur l'axe optique, et une partie d'inclinaison (6B) disposée sur un côté opposé en travers de la partie d' axe (29) de façon à incliner la partie de séparation des flux lumineux (6) dans des directions se rapprochant et s'éloignant de la partie de détection de mise au point (19), la partie de séparation des flux lumineux (6) étant disposée de manière rotative autour de la partie d' axe (29) ;
l'élément de base (28) est configuré pour tourner entre la première position et la troisième position ;
un ressort (31) est prévu entre l'élément de base (28) et la partie d'inclinaison (6B) configurée pour incliner la partie de séparation des flux lumineux (6) dans une direction dans laquelle la partie de séparation des flux lumineux (6) est déplacée de la première position vers la seconde position ; et
la partie de séparation des flux lumineux (6) possède un dispositif d'inclinaison (32) configuré pour incliner la partie d'inclinaison (6B) dans une direction dans laquelle la partie de séparation des flux lumineux (6) est déplacée dans la première position à l'encontre de l'inclinaison du ressort (31).

10. Appareil d'imagerie (1) selon l'une quelconque des revendications 1 à 9, dans lequel la partie de séparation des flux lumineux (6) possède une partie anti lumière parasite (34) configurée pour empêcher toute lumière parasite due à la réflexion de la partie de séparation des flux lumineux (6) de pénétrer dans l'élément d'imagerie (7) lorsque la partie de séparation des flux lumineux (6) se trouve dans la seconde position ; et
la partie anti lumière parasite (34) est configurée pour être rétractée de l'axe optique lorsque la partie de séparation des flux lumineux (6) se trouve dans la première position.

11. Appareil d'imagerie (1) selon la revendication 10, dans lequel la partie anti lumière parasite (34) est prévue de manière rotative via la partie d'axe sur la partie de séparation de flux lumineux de formation d'image (6A) ; et
la partie anti lumière parasite (34) comprend un ressort configuré pour rétracter la partie anti lumière parasite (34) de l'axe optique lorsque la partie de séparation des flux lumineux (6) se trouve dans la première position, et pour incliner la partie anti lumière parasite (34) vers l'élément de base lorsque la partie de séparation des flux lumineux (6) se trouve dans la seconde et la troisième positions.

12. Appareil d'imagerie (1) selon l'une quelconque des revendications 3 à 11, qui comprend en outre :
un mode d'image fixe à imagerie simple dans lequel l'imagerie simple d'une image fixe est réalisée, et un mode d'image fixe à imagerie continue dans lequel une imagerie en continu d'images fixes est réalisée ; dans lequel
le contrôleur contrôle la partie de séparation des flux lumineux (6) afin que la partie de séparation des flux lumineux (6) soit disposée dans la seconde position en cas d'imagerie en mode d'imagerie simple, et soit disposée dans la première position en cas d'imagerie en mode d'imagerie continue.
